(19) Europäisches Patentamt

European Patent Office

Office européen des brevets

(11) **EP 1 248 959 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(21) Anmeldenummer: **00985184.1**

(22) Anmeldetag: **15.12.2000**

(51) Int Cl.:
***G02B 5/28*** (2006.01)

(86) Internationale Anmeldenummer:
**PCT/EP2000/012878**

(87) Internationale Veröffentlichungsnummer:
**WO 2001/046718 (28.06.2001 Gazette 2001/26)**

(54) **UV-REFLEKTIERENDES INTERFERENZSCHICHTSYSTEM**

UV-REFLECTIVE INTERFERENCE LAYER SYSTEM

SYSTEME D'INTERFERENCE EN COUCHES REFLECHISSANT L'ULTRAVIOLET

(84) Benannte Vertragsstaaten:
**AT BE CH CY DE DK ES FI FR GB GR IE IT LI LU MC NL PT SE TR**

(30) Priorität: **22.12.1999 DE 19962144**
**28.02.2000 US 514437**

(43) Veröffentlichungstag der Anmeldung:
**16.10.2002 Patentblatt 2002/42**

(73) Patentinhaber: **Schott AG**
**55122 Mainz (DE)**

(72) Erfinder:
• **VITT, Bruno**
**52080 Aachen (DE)**
• **BLANKENBURG, Jürgen**
**37520 Osterode (DE)**
• **BEHR, Werner, J.**
**31061 Alfeld/Leine (DE)**
• **DASECKE, Karl-Heinz**
**31079 Grünenplan (DE)**
• **LINTNER, Birgit**
**55129 Mainz (DE)**

(74) Vertreter: **Sawodny, Michael-Wolfgang**
**Adolf - Lüken - Höflich - Sawodny,**
**Dreiköniggasse 10**
**89073 Ulm (DE)**

(56) Entgegenhaltungen:
**EP-A- 0 492 785         EP-A- 0 727 813**
**WO-A-00/27771           DE-C- 4 326 947**
**US-A- 4 293 732         US-A- 5 449 413**
**US-A- 5 933 273         US-A- 6 107 564**

• **PATENT ABSTRACTS OF JAPAN vol. 018, no. 175 (P-1716), 24. März 1994 (1994-03-24) & JP 05 341121 A (ASAHI OPTICAL CO LTD), 24. Dezember 1993 (1993-12-24)**
• **PATENT ABSTRACTS OF JAPAN vol. 018, no. 175 (P-1716), 24. März 1994 (1994-03-24) & JP 05 341122 A (ASAHI OPTICAL CO LTD), 24. Dezember 1993 (1993-12-24)**
• **TIKHONRAVOV A.V.; TRUBETSKOV M.K.; DEBELL G.W.: 'DESIGN OF COATINGS FOR WIDE ANGULAR RANGE APPLICATIONS' PROCEEDINGS OF THE SPIE Bd. 3133, August 1997, SPIE, BELLINGHAM, VA, US, Seiten 16 - 24, XP009024563**

**Beschreibung**

Die Erfindung betrifft ein UV-reflektierendes Interferenzschichtsystem für transparente Substrate mit breitbandiger Entspiegelung im sichtbaren Wellenlängenbereich, ein Verfahren zur Beschichtung eines Substrates mit einem derartigen Schichtsystem sowie die Verwendung derartiger Beschichtungssysteme in unterschiedlichen Anwendungsbereichen.

Derzeit bekannte Glasentspiegelungen für den sichtbaren Spektralbereich, wie die MIROGARD oder die AMIRAN-Entspiegelung der Schott-DESAG AG, Grünenplan sind Interferenzfilter aus drei Schichten, wobei zunächst eine Schicht mit einem mittleren Brechungsindex, darauf eine Schicht mit hohem Brechungsindex, meist $TiO_2$, und dann eine Schicht mit niedrigem Brechungsindex, meist $SiO_2$ oder $MgF_2$ abgeschieden werden. Als Schicht mit mittlerem Brechungsindex wird zum Beispiel eine Mischung aus $SiO_2$ und $TiO_2$, aber auch $Al_2O_3$ verwendet. Derartige Drei-Schicht-Entspiegelungen werden etwa auf Brillengläser, auf Monitore, auf Flachglas, zum Beispiel als Schaufensterscheiben, auf zu vergütende Linsen, etc. aufgebracht.

In den meisten Fällen besitzen diese Filter eine blau-violette oder grüne Restreflexion. Bei senkrechtem Lichteinfall ist die Relfexionscharakteristik beidseitig beschichteter Gläser dadurch gekennzeichnet, daß innerhalb des Wellenlängenintervalls von etwa 400 - 700 nm die Reflexion weniger als zum Beispiel 1 % beträgt, aber außerhalb dieses Bereiches die Reflexion auf Werte bis etwa 30 % ansteigt (V- oder W-förmige Charakteristik), also weit über die 8 % des unbeschichteten Glases.

Nachteilig an derartigen Systemen ist, daß bei Betrachtung unter einem Winkel, der zunehmend von der senkrechten Ansicht abweicht, sich die Charakteristik zu immer kürzeren Wellenlängen verschiebt, wodurch das langwellige Reflexionsmaximum in den Bereich des Sichtbaren gerät, und einen unerwünschten Rotanteil der reflektierten Lichtfarbe verursacht.

Ein Ziel der vorliegenden Erfindung ist es daher, eine Entspiegelung zu finden, deren Restreflexion in einem wesentlich breiteren Wellenlängenbereich niedrig ist, also etwa im Bereich von 400 bis mindestens 800 nm bei senkrechtem Lichteinfall, und die darüber hinaus auch breitbandig bei höheren Betrachtungswinkeln entspiegelt. In vielen Anwendungsfällen, wie etwa bei Schaufensterverglasungen oder Verglasungen für Bilder, ist nämlich ein farbneutrales Aussehen wünschenswert, insbesondere für unterschiedliche Betrachtungswinkel.

Insbesondere für Bilderverglasungen etwa in Museen, aber auch im Falle von Schaufenster-Verglasungen, ist es darüber hinaus wünschenswert, daß ein - möglichst farbneutral - entspiegeltes Glas gleichzeitig die Funktion eines Schutzes der Bilderfarben bzw. der Natur- oder Kunstfasern sowie der Farbstoffe der Schaufensterauslagen gegen ultraviolettes Licht übernimmt.

Bekanntermaßen reicht der UV-Anteil des Sonnenlichtes oder der von Lampenlicht; insbesondere bei Metallhalogenid- oder anderen Gasentladungslampen, aber auch bereits bei Halogenlampen aus, um über längere Zeiten erhebliche Schädigungen wie Verfärbung oder Versprödung von Natur- oder Kunststoffen auszulösen. Selbst für Verglasungen in Büro- oder Wohngebäuden wäre ein UV-Schutz wünschenswert, um ein Ausbleichen von Holzoberflächen, Gardinen, Polstermöbeln etc. bei direkter Sonneneinstrahlung stark zu vermindern, und so beispielsweise eine verbesserte passive Solarenergienutzung zu ermöglichen. Derzeitige Wärmeschutzgläser, die eine dünne Silberschicht enthalten, entspiegeln nicht im Sichtbaren, und bieten darüber hinaus auch keinen ausreichenden UV-Schutz, da dünne Silberschichten im UV durchlässig werden.

Bei bekanntem entspiegeltem Weichglas wird UV-Schutz durch die Verwendung organischer Polymere als Absorber für UV-Licht erreicht, beispielsweise als Verbundglas, wobei zwei Glasscheiben mit einer im Brechungsindex an das Glas angepaßten, zum Beispiel 380 $\mu$m dicken PVB-Kunststoffolie zusammenlaminiert werden (Glas MIROGARD-PROTECT von Schott-DESAG). Solche Gläser sind unter intensivem Lampenlicht, zum Beispiel als Vorsatzscheiben für Lampen, aber nicht temperaturstabil und degradieren auch durch intensive UV-Bestrahlung. Ihre jeweils einseitige Dreischichtentspiegelung besitzt zudem die obengenannten Begrenzungen, die Herstellung von Verbundglas ist darüber hinaus aufwendig.

Eine andere Möglichkeit ist die Verwendung von UV-absorbierenden, aber für sichtbares Licht durchlässigen Lackschichten mit einigen Mikrometern Dicke. Derartige Lackschichten sind ebenfalls nicht UV- und temperaturstabil, und müssen nach dem Auftragen auf das Glas noch entspiegelt werden. Betreffend den Stand der Technik wird des weiteren noch auf die nachfolgenden Schriften

D1:   H. Schröder,"Oxide Layers Deposited from Organic Solutions", in Physics of Thin Films, Academic Press, New York, London, Vol. 5 (1969), pp. 87 - 140

D2:   H. Schröder, Optica Acta 9, 249 (1962)

D3:   W. Geffeken, Glastech. Ber. 24, S. 143 (1951)

D4:   H. Dislich, E. Hussmann, Thin Solid films 77 (1981), pp. 129-139

D5:   N. Arfsten, R. Kaufmann, H. Dislich, Patentschrift DE 3300589 C2

D6:   N. Arfsten, B. Lintner, et. al., Patentschrift DE 4326947 C1

D7:    A. Pein, Europäische Patentschrift 0 438 646 B1

D8:    1. Brock, G. Frank, B. Vitt, Europäische Patentschrift 0 300 579 A2

D9:    Kienel/Frey (Hrsg.), "Dünnschicht-Technologie", VDI-Verlag, Düsseldorf (1987)

D10:    R. A. Häfer, "Oberflächen- und Dünnschicht-Technologie", Teil I, "Beschichten von Oberflächen", Springer-Verlag (1987)

verwiesen.

Aus der EP-A- 0727813 ist ein UV-reflektierendes Interferenzschichtsystem für den Kolben einer Halogenglühlampe bekannt geworden, das aus 18 Schichten besteht. Dieses Interferenzschichtsystem weist abwechselnd hoch- und niedrigbrechende Schichten bestehend aus Oxiden von Si, Ca, Ci, Ce, Nb, Hf und von seltenen Erden auf.

Auch aus der US 5449413 ist ein Design umfassend hoch- und niedrigbrechende Schichten bekannt geworden, wobei das Schichtsystem 37 und 48 Schichten aus abwechselnd höher und niedriger brechenden Oxiden aufweist.

Aufgabe der Erfindung ist es somit, eine Beschichtung für ein transparentes Substrat, insbesondere Gläser anzugeben, mit der die zuvor beschriebenen Nachteile überwunden werden können.

Insbesondere soll ohne die Verwendung UV- oder temperaturunbeständiger Polymerfolien oder Lacke einerseits eine UV-Filterung erzielt werden, andererseits soll gleichzeitig eine wesentlich breitbandigere und farbneutralere Entspiegelung des Sichtbaren erfolgen.

Betreffend die UV-Filterung sollen annähernd gleiche Charakteristika wie bei den Folien- oder Lacksystemen erzielt werden.

Erfindungsgemäß wird die Aufgabe durch ein optisches Element gemäß Anspruch 1 gelöst, das genau fünf Einzelschichten umfasst, wobei aufeinanderfolgende Schichten unterschiedliche Brechungsindizes aufweisen und die Einzelschichten UV- und temperaturstabile anorganische Materialien umfassen.

Das Interferenz-Schichtsystem besteht aus fünf Schichten mit der Struktur Glas+M1/T1/M2/T2/S, wobei das hochbrechende Material T bei einer Wellenlänge von 550 nm einen Brechungsindex im Bereich von 1,9 - 2,3, das niedrigbrechende Material S einen Brechungsindex zwischen 1,38 und 1,50 und das mittelbrechende Material M einen Brechungsindex im Bereich von 1,6 - 1,8 aufweist, mit Schichtdicken der einzelnen Materialien in den Bereichen von 70 bis 100 nm (M1), 30 bis 70 nm (T1), 20 bis 40 nm (M2), 30 bis 50 nm (T2) sowie 90 bis 110 nm (S).

In einer Ausgestaltung der Erfindung wird als hochbrechendes Material Titanoxid, als niedrigbrechendes Material Siliziumdioxid, und als mittelbrechendes Material eine Mischung dieser Stoffe verwendet.

In einer alternativen Ausführungsform kann als hochbrechende Schichten anstelle von Titanoxid auch Nioboxid $Nb_2O_5$, Tantaloxid $Ta_2O_5$, Ceroxid $CeO_2$, Hafniumoxid $HfO_2$ sowie deren Mischungen mit Titandioxid oder untereinander eingesetzt werden, als niedrigbrechende Schicht anstelle von Siliziumdioxid auch Magnesiumfluorid $MgF_2$ verwendet werden sowie als mittelbrechende Schichten anstelle von Ti-Si-Oxid-Mischungen auch Aluminiumoxid $Al_2O_3$ oder Zirkonoxid $ZrO_2$ zum Einsatz kommen.

Als transparentes Substrat kann in einer ersten Ausführungsform Weichglas in Form von Floatglas, auch in eisenarmer Form, eingesetzt werden.

Alternativ hierzu können als Substrat auch Hartgläser, insbesondere Aluminosilikat- und Borosilikat-Hartgläser oder Quarzglas eingesetzt werden.

Neben dem Interferenzschichtsystem stellt die Erfindung auch ein Verfahren zum Aufbringen desselben auf ein Substrat zur Verfügung.

In einer ersten Ausgestaltung der Erfindung werden die Einzelschichten mittels Tauchverfahren oder Schleuderverfahren in Sol-Gel-Technik aufgetragen.

Alternativ hierzu können die Schichten mittels Kathodenzerstäubung (zum Beispiel Sputtering), mittels physikalischem Aufdampfen oder mittels chemischer Gasphasenabscheidung, insbesondere plasmaunterstützt, aufgetragen werden.

Besonders bevorzugt werden die erfindungsgemäßen Interferenzbeschichtungen auf transparente Substrate umfassend eine infrarotreflektierende Wärmeschutzbeschichtung aufgebracht bzw. transparente Schichten, die ein Interferenzschichtsystem gemäß der Erfindung umfassen mit einer Wärmeschutzschicht versehen, so daß sich ein UV-reflektierendes Wärmeschutzglas ergibt.

Wärmeschutzgläser beruhen auf dem Prinzip der Reflexion der infraroten Wärmestrahlung durch eine dünne, im Sichtbaren überwiegend transparente, elektrisch leitfähige Beschichtung. Als wärmereflektierende Beschichtung werden im wesentlichen Zinnoxid und Silber-basierende Schichten diskutiert.

Zinnoxid kann sofort nach der Floatglasherstellung - und Applikation einer diffusionshemmenden SiOx-Vorbeschichtung - in der Abkühlphase bei etwa 600° C mit Hilfe eines Sprühprozesses aufgetragen werden. Durch Dotierung mit Fluor oder Antimon erreicht man Flächenwiderstände bei ca. 300 nm Schichtdicke bis zu 15 Ohm, wodurch ein über die Verteilung von 300 K-Wärmestrahlung gemittelter Infrarot-Reflexionsgrad von mehr als 80 % erreicht wird.

Als Fensterverglasung spiegelt dieses Glas also den überwiegenden Teil der Wärmestrahlung in den Raum eines Gebäudes zurück.

Das durch Sprühpyrolyse bei der Floatglasherstellung aufgebrachte Zinnoxid muß z.B. bei Doppelscheiben im Innern gegen Reinigung geschützt werden, obwohl es eine hohe mechanische und chemische Stabilität aufweist, da infolge der relativ hohen Rauheit und Härte bei Reinigungsprozessen Stoffe aufgerieben werden, sowie die Trocknung erschwert wird.

Im Doppelscheiben-Isolierglasverbund mit einer unbeschichteten Flachglasscheibe erreichen diese Gläser einen Wärmedurchgangswert - je nach Gasfüllung und Glasabstand - von bis zu k = 1,6 W/m$^2$K. Nachteilig ist die nur mäßige sichtbare Transmission eines solchen Doppelscheiben-Isolierglases von 75 % für zwei Scheiben mit 4 mm Dicke, die überwiegend auf die Reflexion an den Grenzflächen zurückzuführen ist. Die UV-Transmission, die nicht nur bei Anwendung als Verglasung z.B. von Museen oder Textil-Geschäften, sondern auch für Wohn- oder Bürogebäude möglichst niedrig sein sollte, beträgt 35 % im Bereich 280 bis 380 nm.

Anstelle von dotiertem Zinnoxid $SnO_2$:F,Sb können auch die transparenten Halbleitermaterialien Zinkoxid ZnO: Al (Aluminium-dotiert) und Indiumoxid $In_2O_3$:Sn (Zinn-dotiert, "ITO") verwendet werden. ITO besitzt allerdings eine deutlich geringere elektrochemische Stabilität als Zinnoxid und benötigt nach dem Sprühprozeß Nachbehandlungen, Zinkoxid läßt sich mittels Sprühprozeß nicht mit ausreichender elektrischer Leitfähigkeit herstellen.

Silber-basierte wärmereflektierende Beschichtungen erreichen deutlich günstigere Flächenwiderstände bis unter 1 Ohm, und damit Infrarot-Emissionsgrade von 9 bis 4 %, im Grenzfall bis zu 2 %, so daß auf der Basis einer derartig beschichteten Scheibe im Doppelscheiben-Isolierglasverbund k-Werte von 1,1 bis 1,4 W/m$^2$K möglich sind. Die sichtbare Transmission beträgt dabei maximal 76 %, und sinkt im Falle dickerer Silberschichten für k-Werte unter 1,0 W/m$^2$K auf etwa 68 % ab. Die UV-Transmission liegt bei 36 - 19 %.

Die Abscheidung der hinsichtlich Wärmereflexion günstigeren Silberschichten muß allerdings nach der Glasherstellung recht aufwendig mittels VakuumBeschichtungsverfahren vorgenommen werden, wobei außerdem noch weitere, die Silberschicht beidseitig umschließende dielektrische Schichten und eventuell auch metallische Schichten zwecks Erhöhung von Transmission und Langzeitstabilität erforderlich sind.

Ein weiterer Nachteil ist, daß der Silber-Schicht-Verbund stets nur im Inneren von Doppelscheiben-Isoliergläsern angewandt werden kann, da eine dauerhafte mechanische und auch chemische Stabilität gegenüber Reinigungsprozessen nicht gewährleistet ist.

Die sichtbare Transmission von wärmereflektiereden Isoliergläsem ist, wie oben dargelegt, sowohl im Falle der Anwendung von Zinnoxid als auch für Silber-basierte Schichten nicht ausreichend. Durch einen Antireflexionsbelag auf allen vier Grenzflächen eines Doppelscheiben-Isolierglases können Gläser erhalten werden, deren sichtbare Transmission auf 88 % gesteigert ist. Allerdings beträgt die UV-Transmission immer noch 25 %.

Durch Aufbringen eines erfindungsgemäßen Interferenzschichtsystems können Wärmeschutzgläser mit niedriger Transmission im UV-Bereich und hoher Transmission im sichtbaren Bereich, sogenannte UV-reflektierende Wärmeschutzgläser, erhalten werden.

Bevorzugt umfaßt ein erfindungsgemäßes UV-reflektierendes Wärmeschutzglas ein mit elektrisch leitfähigem Zinnoxid beschichtetes und infrarotreflektierendes Wärmeschutz-Flachglas, das beidseitig mit einem UV-reflektierenden Interferenzschichtcystem versehen ist, eine einseitig Zinnoxid-beschichtete, und nachfolgend beidseitig mit dem UV-reflektierenden, breitbandig entspiegelnden Mehrschichtbelag versehene Einfachscheibe eine (gemittelte) sichtbare Transmission von 90 % und mehr, sowie eine UV-Transmission (280 - 380 nm) von 8 % oder weniger, wobei die Wärmestrahlungseigenschaften des Zinnoxides unverändert bleiben.

Alternativ hierzu können UV-reflektierende Wärmeschutzgläser mit Silber-basierten, wärmereflektierenden "low-e" Schichten, insbesondere in Form von Doppelscheiben-Isoliergläsern erhalten werden. Werden - bis auf die innen auf einer Glasfläche angebrachte low-e-Schicht - alle restlichen drei Glasflächen mit einem Interferenzschichtsystem versehen, so steigt - bei unverändertem Wärmedurchgangswert k - die sichtbare Transmission z.B. von 76 % auf 85 %, während die UV-Transmission von ca. 30 % auf etwa 4 % reduziert wird.

Wird die low-e-Schicht einseitig auf ein vorher beidseitig mit einem erfindungsgemäßen Interferenzschichtsystem entspiegeltes Flachglas aufgebracht, und mit einer zweiten mit einem Interferenzschichtsystem beidseitig entspiegelten Scheibe als Doppelscheiben-Isolierglas kombiniert, so erhöht sich die sichtbare Transmission weiter auf 87 %, während die UV-Transmission auf 3 % reduziert wird.

Ist die zweite Scheibe vor der beidseitigen Entspiegelung mit einem Interferenzschichtsystem einseitig mit Zinnoxid beschichtet, so wird der k-Wert um ca. 0,2 W/m$^2$K reduziert, also z.B. von 1,0 auf 0,8 W/m$^2$K.

Die sichtbare Transmission einer einseitig mit Zinnoxid beschichteten und beidseitig mit einem Interferenzschichtsystem entspiegelten Einfachscheibe mit einer Dicke von 4 mm ist um absolute 10 % höher als die von nichtentspiegeltem Zinnoxid-Wärmeschutzglas, und 2 bis 3 % höher als die von unbeschichtetem Floatglas. Gleichzeitig wird die UV-Transmission ohne die Anwendung polymerer Lacke oder Folien von ca. 45 % auf 8 % gesenkt.

Kombiniert man eine Zinnoxid-beschichtete und beidseitig mit dem UV-reflektierenden Interferenzschichtsystem versehene Einfachscheibe mit einer identischen zweiten Scheibe, so wird die verbleibende UV-Transmission auf 3 % gesenkt, wobei nur noch ein kleiner Rest langwelliger Strahlung im Wellenlängenbereich von 360 bis 380 nm durchgelassen wird.

Gleichzeitig werden die Wärmeschutzeigenschaften durch die Infrarotreflexion an jetzt zwei Zinnoxidschichten deutlich verbessert, wobei k-Werte von ca. 1,2 W/m$^2$K möglich sind, die ansonsten nur von Silber-basierten Wärmeschutzgläsern erreicht werden. Die Anwendung einer doppelten, IRreflektierenden Zinnoxid-Schicht ist nur möglich, weil durch die effiziente Breitbandentspiegelung aller vier Grenzflächen mit einem erfindungsgemäßen Interferenzschichtsystem die sichtbare Gesamttransmission bei etwa 87 % für normal eisenhaltiges Floatglas mit zwei Scheiben einer Dicke je 4 mm liegt.

Wird - wie bislang üblich - nur eine Zinnoxidschicht in einem Doppelscheiben-Wärmeschutzglas verwendet, so verbleibt der k-Wert bei minimal 1,6 W/m$^2$K verbunden mit einer etwas höheren sichtbaren Transmission von 88 % sowie einer UV-Transmission von 4 %.

Die Erfindung soll nachfolgend anhand der Figuren beschrieben werden.

Es zeigen:

| | |
|---|---|
| Figur 1 | den Reflexionsgrad über der Wellenlänge in Abhängigkeit vom Einfallswinkel der MIROGARD-Entspiegelung der SCHOTT-DESAG, Grünenplan gemäß dem Stand der Technik |
| Figur 2 | den Reflexionsgrad über der Wellenlänge in Abhängigkeit vom Einfallswinkel der AMIRAN-Entspiegelung der SCHOTT-DESAG, Grünenplan gemäß dem Stand der Technik |
| Figur 3 | die Durchlässigkeit von UV-Filtern auf Weichglas gemäß dem Stand der Technik in Abhängigkeit von der Wellenlänge |
| Figur 4 | das Transmissionsspektrum eines erfindungsgemäßen System gemäß Ausführungsbeispiel 1 |
| Figur 5 | das Transmissionsspektrum eines Systems gemäß Ausführungsbeispiel 1 mit mehreren Scheiben |
| Figur 6 | Reflexionscharakteristik eines erfindungsgemäßen Systems |
| Figur 7 | Reflexionscharakteristik eines erfindungsgemäßen Systems bei einem Einfallswinkel $\phi = 30°$ |
| Figuren 8a, 8b | Reflexionscharakteristik eines erfindungsgemäßen Systems bei einem Einfallswinkel $\phi = 8°$ |
| Figur 9 | Reflexionscharakteristik eines erfindungsgemäßen Systems gemäß Beispiel 2 |
| Figur 10 | Reflexionscharakteristik eines erfindungsgemäßen Systems gemäß Beispiel 3 |
| Figuren | 11a - 11 c schematische Darstellung unterschiedlicher Wärmeschutzgläser |
| Figuren 12a - 12c | Transmissionscharakteristik von Wärmeschutzgläsern gemäß Beispiel 4 |
| Figuren 12d - 12e | Reflexionscharakteristik von Wärmeschutzgläsern gemäß Beispiel 4 |

Figur 1 zeigt die Abhängigkeit des Reflexionsgrades R vom Einfallswinkel für die MIROGARD-Entspiegelung der Schott-DESAG. Die Messungen des Reflexionsgrades wurden für unterschiedliche Winkel (12,5 bis 50°) des einfallenden Lichtes gegen die Flächennormale aufgenommen.

Figur 2 zeigt den Reflexionsgrad R für die Dreischichtentspiegelungen AMIRAN der Schott-DESAG AG, Grünenplan.

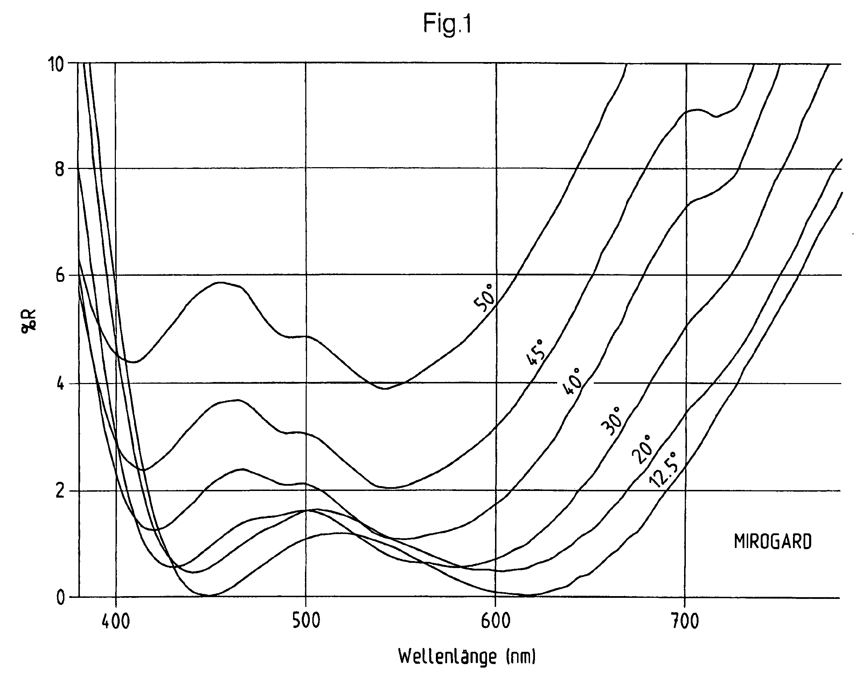

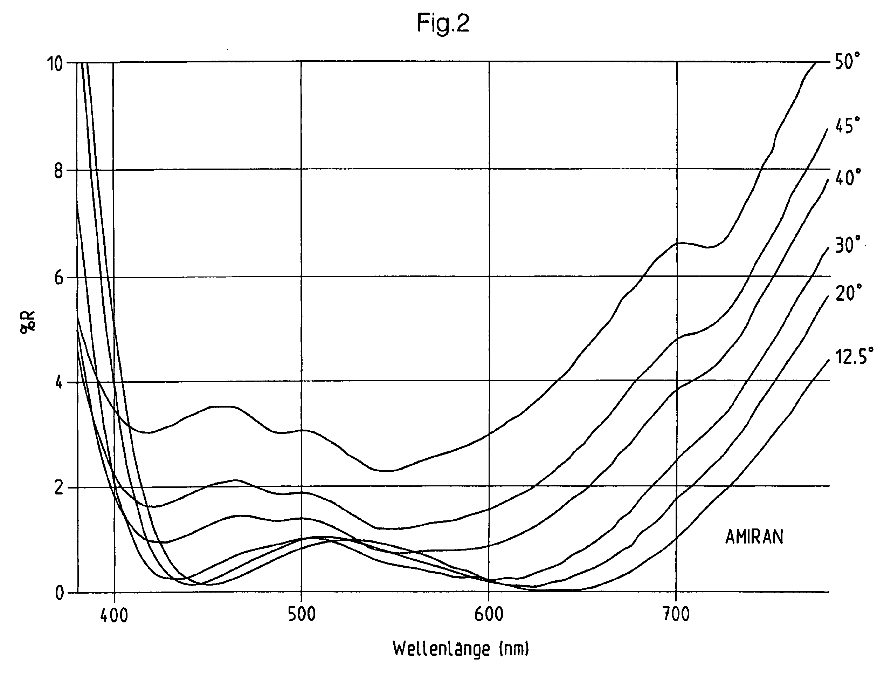

Die Systeme gemäß der Figuren 1 und 2 zeigen eine starke Abhängigkeit des Reflexionsgrades vom Einfallswinkel des Lichtes.

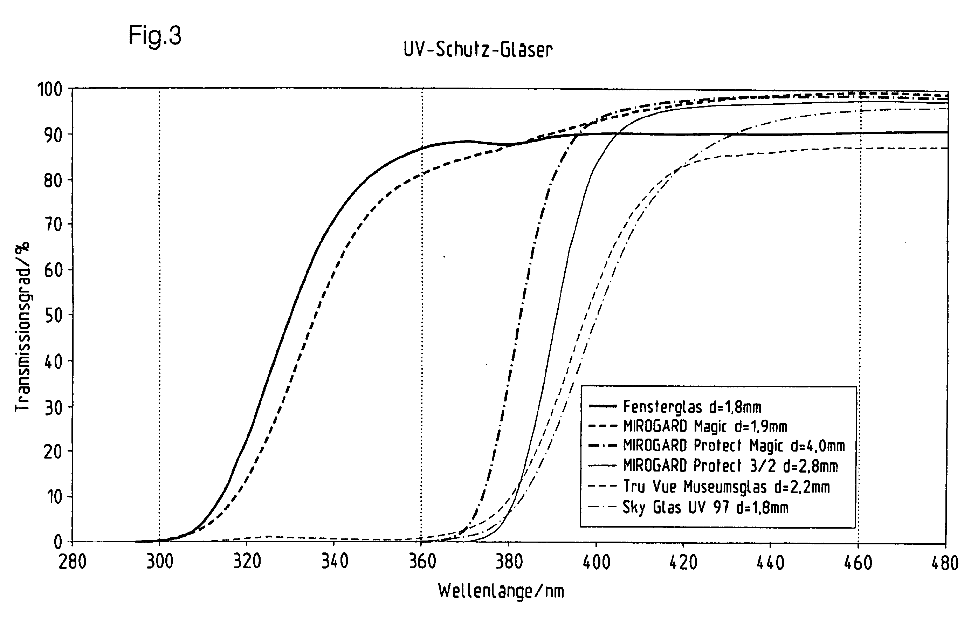

In Figur 3 ist die Durchlässigkeit verschiedener UV-Filter gemäß dem Stand der Technik auf Weichglas als Funktion der Wellenlänge gezeigt. Normales Fensterglas ist unterhalb 290 nm infolge Absorption praktisch undurchlässig, so daß nur die verbesserte Blockierung im UV-B-Bereich, also bis 315 nm, aber hauptsächlich die Blockierung bei 315 und 380 nm als Aufgabe bleibt.

Eine MIROGARD-Dreischichtentspiegelung ohne Kunststofffolie bringt gegenüber unbeschichtetem Glas bereits eine geringe Verbesserung der UV-Blockade durch Absorption und Reflexion. MIROGARD-Protect Verbundglas ist sehr wirksam als UV-A-Blocker, TrueVue und Sky Glas ebenfalls, jedoch ist TrueVue stark bläulich in Reflexion und deutlich gelb in Transmission.

Nachfolgend werden Beispiele 1 - 3 eines erfindungsgemäßen Systems mit gegenüber dem Stand der Technik verbesserten Eigenschaften detailliert beschrieben:

Beispiel 1 (farbneutrales Filter):

Es wird ein UV-Filter mit kombinierter Breitbandentspiegelungswirkung auf Weichglas (d = 3mm, nicht eisenarm) mittels Tauchverfahren (Sol-Gel-Prozeß) beidseitig hergestellt, mit der Maßgabe eines möglichst farbneutralen Aussehens.

Die Beschichtung auf beiden Seiten besteht aus jeweils fünf Einzelschichten, und besitzt die Struktur: Glas + M* + T + M + T + S. Die Einzelschichten werden jeweils beidseitig identisch in einem Tauchschritt aufgetragen.

Die mit T gekennzeichneten Schichten enthalten Titandioxid $TiO_2$, die mit S gekennzeichnete Deckschicht enthält Siliziumdioxid $SiO_2$, die M-Schichten werden jeweils aus S- und T-Mischlösungen gezogen.

Das Floatglassubstrat wird vor der Beschichtung sorgfältig gereinigt. Die Tauchlösungen werden jeweils in auf 28° C klimatisierten Räumen bei einer Luftfeuchtigkeit von 7 bis 12 g/m3 aufgetragen, die Ziehgeschwindigkeiten betragen dabei für die Einzelschichten M*/T/M/T/S: 495/262/345/206/498 mm/min.

Auf das Ziehen einer jeden Gelschicht folgt ein Ausheizprozeß an Luft. Die Ausheiztemperaturen und Ausheizzeiten betragen 180° C / 20 min nach Herstellung der ersten, zweiten und dritten Gelschicht sowie 440° C / 30 min nach der vierten und nach der fünften Schicht.

Im Falle der T-Schichten setzt sich die Tauchlösung (pro Liter) zusammen aus:
68 ml Titan-n-Butylat, 918 ml Ethanol (abs.), 5 ml Acetylaceton,
und 9 ml Ethyl-Butyrylacetat.

Die Tauchlösung zur Herstellung der S-Schicht enthält:
125 ml Kieselsäuremethylester, 400 ml Ethanol (abs.), 75 ml H2 (dest.), 7,5 ml Essigsäure und wird nach einer Ruhezeit von ca. 12 h mit 393 ml Ethanol (abs.) verdünnt.

Die Beschichtungslösungen zur Herstellung der Oxide mit mittlerem Brechungsindex werden durch Mischung der S- und T-Lösungen präpariert. Die mit M gekennzeichnete Schicht in Beispiel 1 wird aus einer Tauchlösung mit einem Siliziumoxidgehalt von 5,5 g/l und einem Titanoxidgehalt von 2,8 g/l gezogen, die entsprechenden Oxidgehalte der M*-Tauchlösung betragen 11,0 g/l bzw. 8,5 g/l.

Der in Beispiel 1 angewandte naßchemische Sol-Gel-Prozeß erlaubt als Tauchverfahren die wirtschaftliche Beschichtung großer Flächen wie etwa Architekturgläser mit Interferenzfiltern, wobei die Möglichkeit der beidseitigen Beschichtung in einem Arbeitsgang und der Realisierung von Mischoxiden mit dem jeweilig gewünschten Brechungsindex von großem Vorteil sind.

Scheiben können dabei entweder beidseitig oder nach Abdecken einer Glasseite auch einseitig beschichtet werden.

Alternative Beschichtungsverfahren sind das physikalische Aufdampfen im Hochvakuum und seine Weiterentwicklungen hinsichtlich Ionen- und Plasmaunterstützung und die Kathodenzerstäubung.

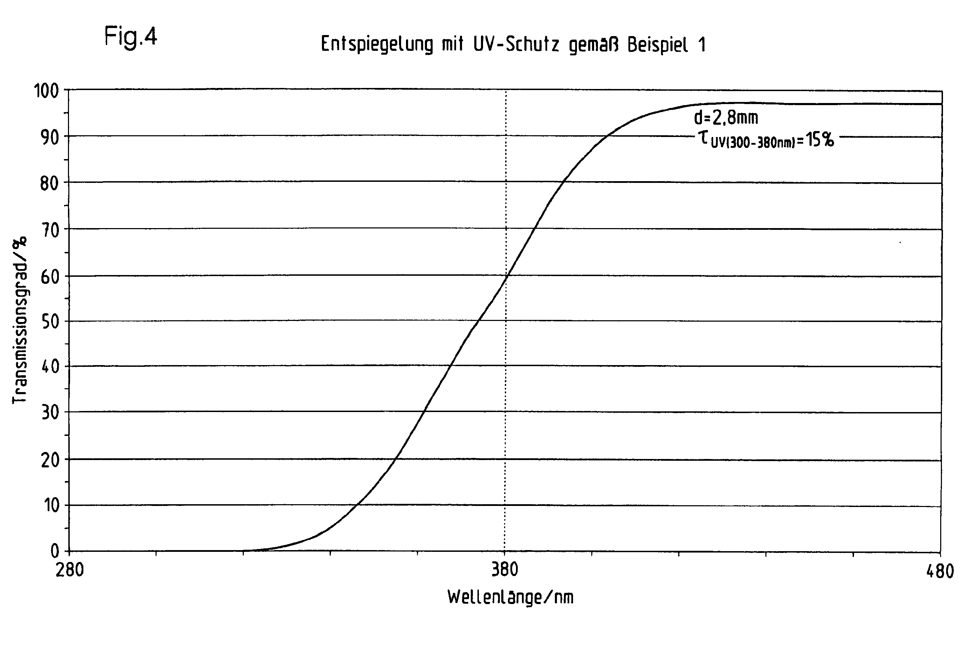

Figur 4 zeigt das Transmissionsspektrum eines erfindungsgemäßen Filters im Wellenlängenbereich 280 bis 480 nm, hergestellt gemäß Ausführungsbeispiel 1 (farbneutrales Filter). Auch ohne die Verwendung polymerer Werkstoffe wird der gefährliche UV-B-Bereich vollständig, der UV-A-Bereich zu mehr als 2/3 blockiert, wobei nur der weniger schädliche Bereich 340 - 380 nm etwa zu 1/3 durchgelassen wird. Hierbei ist anzumerken, daß die Schädlichkeit der UV-Strahlung zu kürzeren Wellenlängen hin stetig zunimmt.

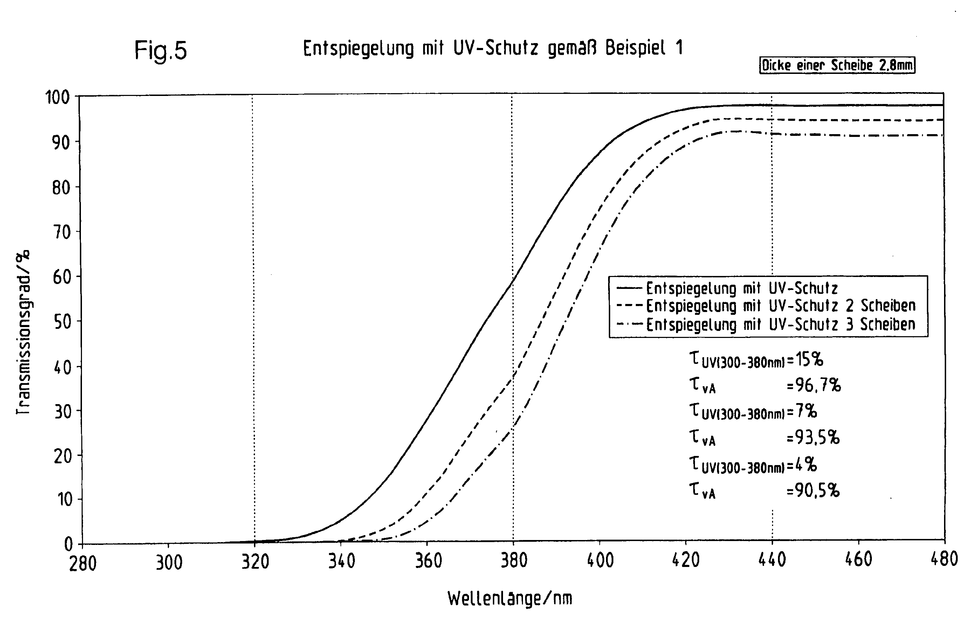

Die Durchlässigkeit im Wellenlängenbereich 300 bis 380 nm beträgt 15 %, verglichen mit einer unbeschichteten Glasscheibe (ca. 60 %) ist dies eine UV-Dämpfung um den Faktor 4. Im Falle von Gebäudeverglasungen werden allerdings meist Doppelscheiben, weniger häufig Dreifachscheiben verwendet. Die Verwendung von Mehrfachscheiben verbessert den UV-Schutz nochmals erheblich, wie Figur 5 zeigt.

Bei Doppelscheiben, jeweils beidseitig mit dem erfindungsgemäßen UV-Filter versehen, sinkt die Durchlässigkeit im Bereich 300 - 380 nm bereits auf 7 %, für Dreifachscheiben wurde ein Wert von 4 % gemessen. Gleichzeitig betragen die Reflexionsverluste im Bereich des sichtbaren Sonnenlichtes für diese Architekturverglasungen nur ca. 1 % für Einfachscheiben, also etwa 2 % bzw. 3 % für Doppel- bzw. Dreifachscheiben. Verglichen mit den unbeschichteten Gläsern bedeutet dies eine Reduzierung der Reflexionsverluste um absolute 7 % für die Einfachscheibe, und 14 % bzw. 21 % für die Doppel- und Dreifachscheiben.

Insbesondere für Verglasungen von Museen und Textilfachgeschäften ist hiermit ein neuer Stand der Technik geschaffen, da das erfindungsgemäße Fünf-Schichten-Filter gegenüber der Drei-Schichten-Lösung nur einen relativ geringen Mehraufwand darstellt.

Darüber hinaus löst das erfindungsgemäße Filter auch die Aufgabe, gleichzeitig eine farbneutrale Entspiegelung zu realisieren, die durch die große Breite des Bereiches niedriger Reflexion auch eine farbneutrale Entspiegelung unter größeren Betrachtungswinkeln garantiert.

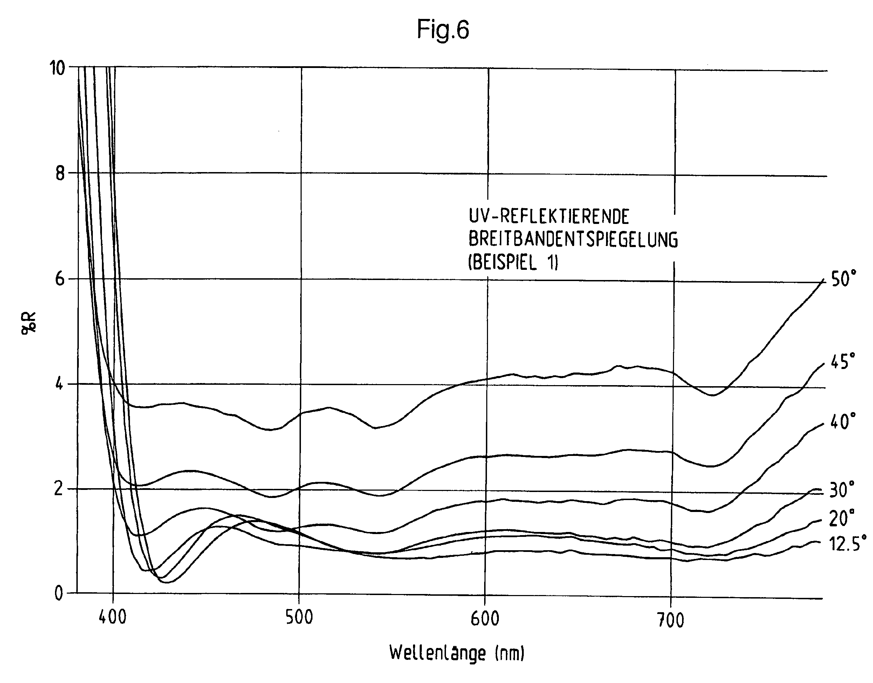

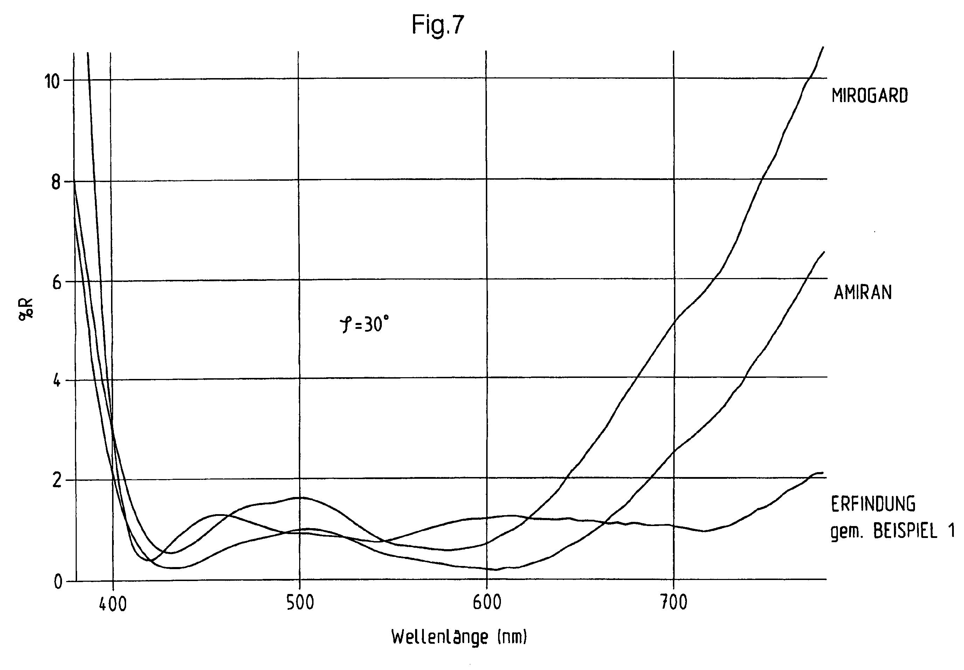

Figur 6 zeigt die gemessene Reflexionscharakteristik des erfindungsgemäßen Filters im sichtbaren Bereich von 380 bis 780 nm in Abhängigkeit vom Betrachtungswinkel (12,5 - 50°). Ein Vergleich mit den Figuren 1 und 2 demonstriert die Überlegenheit der erfindungsgemäßen Lösung gegenüber MIROGARD und auch AMIRAN hinsichtlich Breitbandigkeit, insbesondere auch unter größeren Betrachtungswinkeln. Dies wird auch aus Figur 7 durch Vergleich des erfindungsgemäßen Filters mit diesen Drei-Schicht-Lösungen für einen festen Beobachtungswinkel von 30° deutlich.

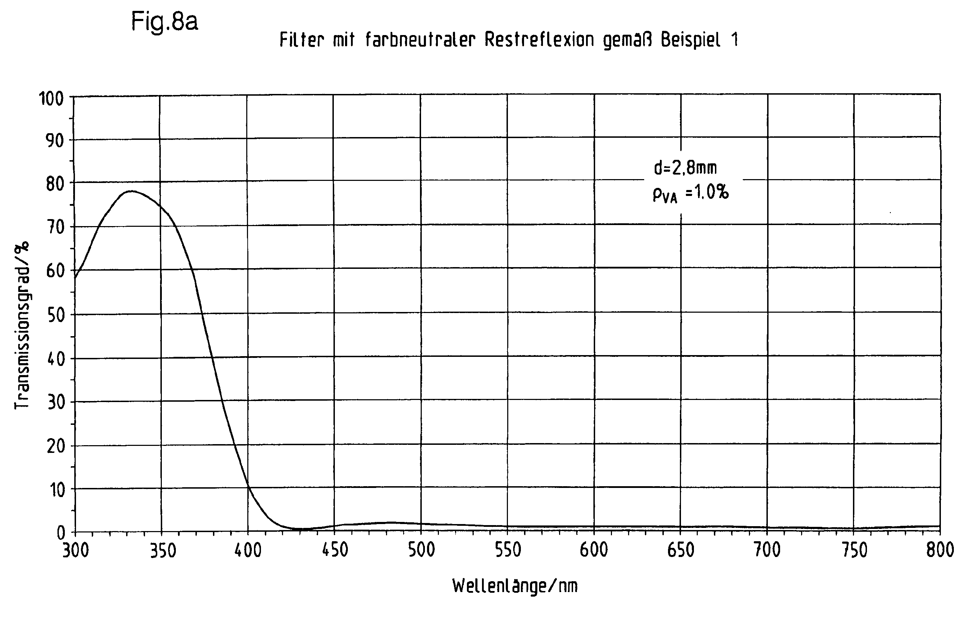

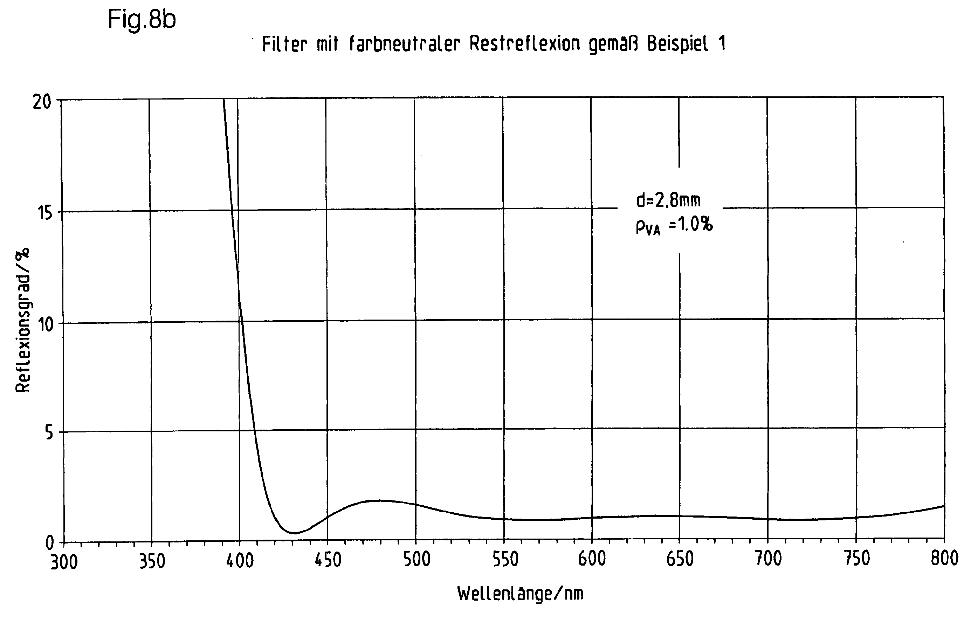

Figuren 8a und 8b zeigen das Reflexionsspektrum für einen Betrachtungswinkel von 8° mit verschiedenen Maßstäben von R, und einem besonders in Richtung UV vergrößerten Wellenlängenbereich: Der durchschnittliche Reflexionsgrad im Bereich von 400 bis 800 nm beträgt 1 %, der subjektive Farbeindruck ist wesentlich neutraler, insbesondere auch für große Betrachtungswinkel oberhalb 30°, als bei allen herkömmlichen Dreischichtentspiegelungen.

Wie Figur 8a zeigt, beruht die Blockadewirkung des erfindungsgemäßen UV-Filters überwiegend auf Reflexion, und weniger auf Absorption (UV-Reflektor).

Die so hergestellten optischen Filter zeigen nicht nur die zuvor beschriebene wellenlängenabhängige Transmissions- und Reflexionscharakteristik, sondern zeichnen sich insbesondere durch eine hohe optische Qualität aus, sind frei von Rissen, von Trübungen und Lichtstreuung, und vermitteln einen sehr farbneutralen Eindruck in Reflexion. Sie zeigen insbesondere aber auch in Transmission keine farbverfälschende Wirkung, was zum Beispiel für Bilderverglasungen sehr wichtig ist.

Folgende Lebensdauer- und Anwendungstests hinsichtlich Anwendung in Innenräumen wurden mit dem gemäß Beispiel 1 hergestellten Filtern durchgeführt:

- Boiltest (DIN 51 165), Kondenswasser-Konstantklima (DIN 50 017), Salzsprühnebel-Prüfung (DIN 50 021), Cass-Test (Kupferchlorid + Essigsäure + NaCl)

sowie hinsichtlich Außenanwendung

- Kondenswasserbeständigkeitsprüfung, Säurebeständigkeitsprüfung, Abriebfestigkeitsprüfung (jeweils Anforderungsklasse A).

Die erfindungsgemäß beschichteten Gläser widerstanden den hier aufgeführten Tests und können somit sowohl in Innenräumen, als auch im Außenbereich, zum Beispiel als Architekturverglasungen, angewandt werden.

Die Erfindung wird nachfolgend noch anhand zweier weiterer Ausführungsbeispiele erläutert:

Beispiel 2 (grüne Entspiegelung):

Die Herstellung eines UV-Filters mit kombinierter Breitbandentspiegelungswirkung auf Weichglas, mit der Maßgabe einer grünen Restreflexionsfarbe, erfolgt analog zu Beispiel 1, allerdings wird die erste Schicht (M*) aus Beispiel 1 jetzt durch eine Schicht M# ersetzt, die aus einer Silizium-Titan-Mischlösung mit modifizierter Zusammensetzung gezogen wird. Diese Lösung weist einen Siliziumoxidgehalt von 11,0 g/l und einen Titanoxidgehalt von 5,5 g/l auf. Durch den relativ niedrigen Titangehalt besitzen die so hergestellten M#-Schichten gegenüber M* einen etwas niedrigeren Brechungsindex.

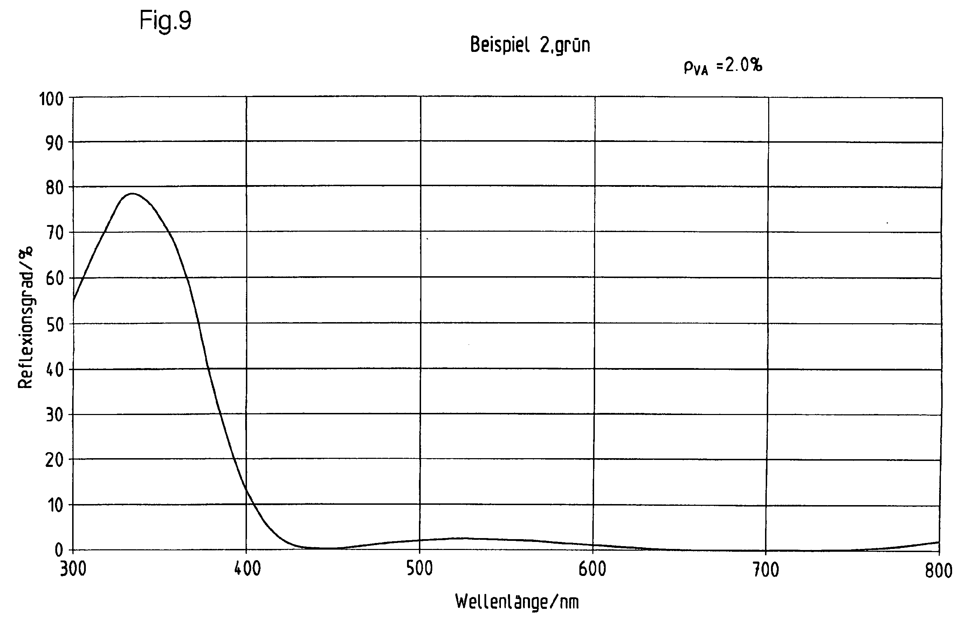

Als Ziehgeschwindigkeiten werden nun für die Einzelschichten M#/T/M/T/S: v = 540/262/345/206/500 mm/min gewählt, wobei ein optisches Filter mit einer Reflexionscharakteristik gemäß Figur 9 erhalten wird, das sich von dem Filter aus Beispiel 1 im wesentlichen nur durch die geänderte Restreflexion im Sichtbaren unterscheidet. Weitere Eigenschaften des Filters entsprechen dem Beispiel 1.

Beispiel 3 (blau-violette Entspiegelung):

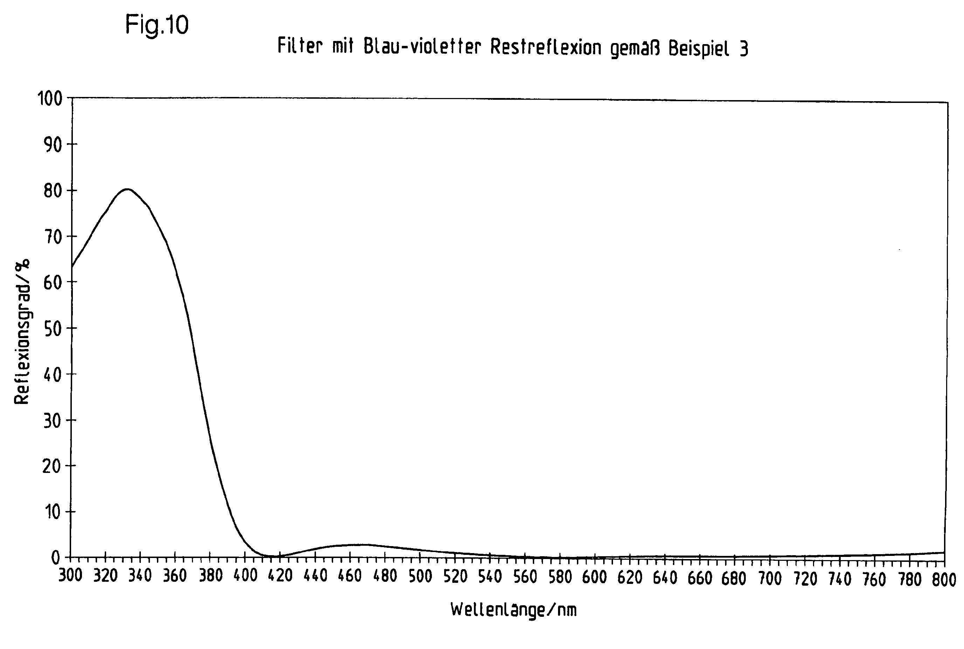

Die Herstellung eines erfindungsgemäßen Filters, jedoch mit blau-violetter Farbe der Restreflexion, erfolgt mit dem Verfahren und auch den Einzelschichten gemäß Beispiel 1, aber mit den folgenden Zielgeschwindigkeiten für M*/T/M/T/S: v= 525/247/302/194/470 mm/min. Hierdurch wird ein Filter mit einer Reflexionscharakteristik entsprechend Figur 10 erhalten. Bis auf den geänderten Farbeindruck der Restreflexion entsprechen die weiteren Eigenschaften des Filters denen der Ausführungsbeispiele 1 und 2.

Mit der Erfindung wird erstmals eine Beschichtung angegeben, die die Grenzflächen Glas-Luft im sichtbaren Wellenlängenbereich (380 - 780 nm) vorzugsweise farbneutral entspiegelt, und gleichzeitig die W-Schutz-Eigenschaften von transparenten Substraten im Wellenlängenbereich des UV-A (315 - 380 nm) und UV-B (280 - 315 nm) erheblich verbessert.

Anwendungsgebiete des erfindungsgemäßen optischen Filters sind neben der Beschichtung von Glasscheiben auch die Beschichtung von Lampenkolben in der Lichtindustrie, um das ausgestrahlte sichtbare Licht, insbesondere auch unter größeren Emissionswinkeln, farbneutral zu erhöhen, und gleichzeitig die UV-Ausstrahlung zu reduzieren. Dies betrifft insbesondere Entladungslampen mit Quarzglaskolben, zum Beispiel Metallhalogenid-Lampen, in geringerem Maße aber auch Halogenlampen mit Quarz- oder Hartglaskolben.

Des weiteren kann die Beschichtung von rohrförmigen Hüllkolben für Lampen mit dem erfindungsgemäßen Filter erfolgen sowie die Anwendung des Filters auf planen Vorsatzscheiben aus Hart- und Weichglas.

Eine besonders bevorzugte Verwendung der erfindungsgemäßen Interferenzschichtsysteme ist die Beschichtung von Wärmeschutzgläsern.

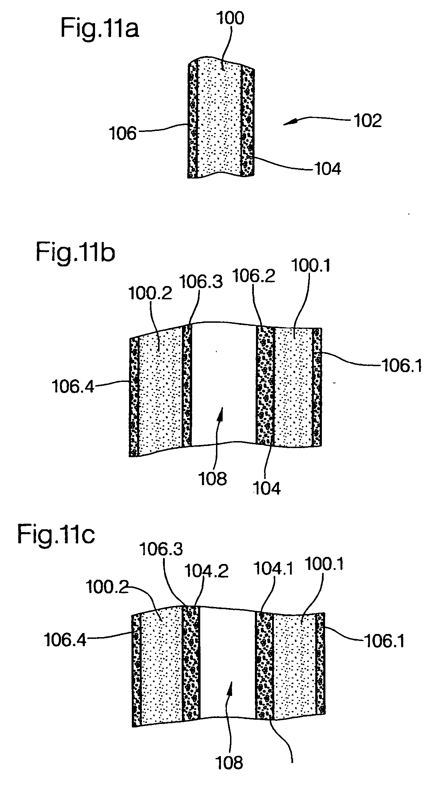

In den Figuren 11a bis 11c sind Anwendungs-Konfigurationen von erfindungsgemäßen W-reflektierenden Wärmeschutzgläsern dargestellt, bei denen wenigstens eine Seite eines transparenten Substrates mit einem UV-reflektierenden 5-fach-Schicht-Interferensystems beschichtet wurden. Auch andere Schichtaufbauten sind möglich, soweit die Einzelschichten erfindungsgemäß die temperaturstabilen anorganischen Materialien umfassen.

Figur 11 a zeigt ein einfaches System, eine sogenannte Einfachscheibe, umfassend ein Substrat 100, auf dessen in das Innere eines Raumes 102 zeigenden Seite eine Wärmeschutzschicht, vorliegend eine Zinnoxid-Schicht 104 aufgetragen wurde. Auf der Außenseite umfaßt die Einfachscheibe ein erfindungsgemäßes Interferenzschichtsystem 106. Mit einem derartigen System wird im sichtbaren Bereich eine Transmission von mehr als 93 % und eine Reflexion von 2 % erreicht und im UV-Bereich die Transmission auf weniger als 8 % des einfallenden Lichtes abgesenkt.

Der erreichbare k-Wert beträgt 3,5 Wm$^2$/K.

Bei Verwendung von zwei transparenten Substraten 100.1, 100.2 kann eine Doppel-Isolierglasscheibe aufgebaut werden wie in Figur 11 b gezeigt. Bei der in Figur 11 b gezeigten Doppel-Isolierglasscheibe ist nur ein transparentes Substrat, das transparente Substrat 100.1, mit einer wärmereflektierenden Zinnoxidschicht 104 beschichtet. Die Zinnoxidschicht 104 liegt zum Inneren 108 der Doppelscheibe zu. Auf alle vier Seiten der zwei transparenten Substrate 100.1, 100.2 sind UV-reflektierende Interferenzschichtsysteme 106.1, 106.2, 106.3, 106.4 aufgebracht. Mit einem derartigen System ist eine Transmission von mehr als 88 % bei einer Reflexion von weniger als 3 % im sichtbaren Bereich erzielbar. Die Transmission im UV Bereich beträgt weniger als 4 %, der k-Wert liegt bei 1,6 W/m$^2$K.

Figur 11c zeigt wiederum ein System mit zwei transparenten Substraten 100.1, 100.2. Das System unterscheidet sich vom System gemäß Figur 11b dadurch, daß auf beide transparente Substrate 100.1, 100.2 zur Innenseite 108 der Doppel-Isolierglasscheibe wärmereflektierende Schichten 104.1, 104.2 aufgebracht sind. Wie bei der Ausführungsform gemäß Figur 11 b sind alle Seiten der transparenten Substrate mit einem 5-Schicht-Interferenzsystem gemäß der Erfindung beschichtet.

Bei einem System gemäß Figur 11c wird eine Transmission von mehr als 87 % und eine Reflexion von weniger als 3 % im sichtbaren Bereich erreicht. Die Transmission im UV-Bereich beträgt weniger als 3 %, der k-Wert 1,2 W/m$^2$K.

Als UV-Bereich wird vorliegend der Wellenlängenbereich 280 bis 380 nm bezeichnet. Bei dem verwendeten transparenten Substrat handelt es sich um ein nicht-eisenarmes Floatglassubstrat einer Dicke von 4 mm.

Bei den Interferenzschichtsystemen, die auf das Wärmeschutzglas zur Breitbandentspiegelung aufgebracht werden, besitzt die der Luft zugewandte, oberste der fünf Schichten (S) einen Brechungsindex, der geringer ist als der des Glases (n = 1,52). Die Schicht besteht vorzugsweise ganz überwiegend aus Quarzglas (SiO$_2$, n = 1,40 - 1,46). Die - jeweils von S aus gesehen - zweiten und vierten Schichten (T) bestehen aus einem Material mit einem hohen Brechungsindex (n = 2,0 - 2,3), vorzugsweise Titandioxid (TiO$_2$). Die M-Schichten weisen einen Brechungsindex mittlerer Höhe von n = 1,6 - 1,8 auf, was vorzugsweise durch ein Silizium-Titan-Mischoxid realisiert werden kann.

Die Schichtdicke der dem Glas bzw. dem Zinnoxid benachbarten M-Schicht(en) liegt je nach Ausgestaltung des optischen Filters bei 70 - 100 nm, die der anderen M-Schichten bei 20 bis 40 nm, die dem Glas nähere T-Schicht besitzt eine Schichtdicke von 30 bis 70 nm, die zu S nähere T-Schicht 30 bis 50 nm sowie die Deckschicht (S) 90 bis 110 nm.

Die Abscheidung dieser Materialien auf dem Glasträger erfolgt vorzugsweise mittels Tauchverfahren, wobei beispielsweise eine Flachglasscheibe entweder beidseitig oder nach Abdecken einer Glasseite auch einseitig beschichtet werden kann. Nachfolgend sollen die mit dem erfindungsgemäßen Interferenzschichtsystem erhaltenen Wärmeschutzgläser anhand von Ausführungsbeispielen näher erläutert werden:

Beispiel 4:

Es wird ein einseitig mit Zinnoxid beschichtetes Flachglas (d = 3 mm, nicht eisenarm, Flächenwiderstand 15 Ohm) mittels Tauchverfahren (Sol-Gel-Prozeß) gemäß dem zuvor ausgeführten Beispiel 1 beidseitig identisch mit einem UV-reflektierenden 5-Schicht-Breitbandantireflexionsbelag versehen, so daß eine Struktur STMTM/Glas/ZInnoxid/MT-MTS entsteht.

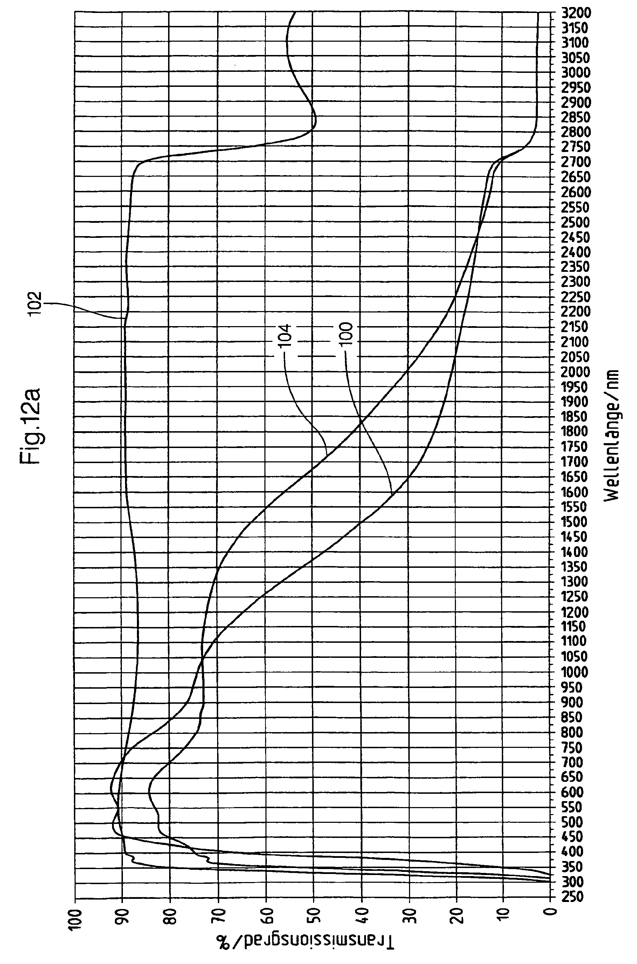

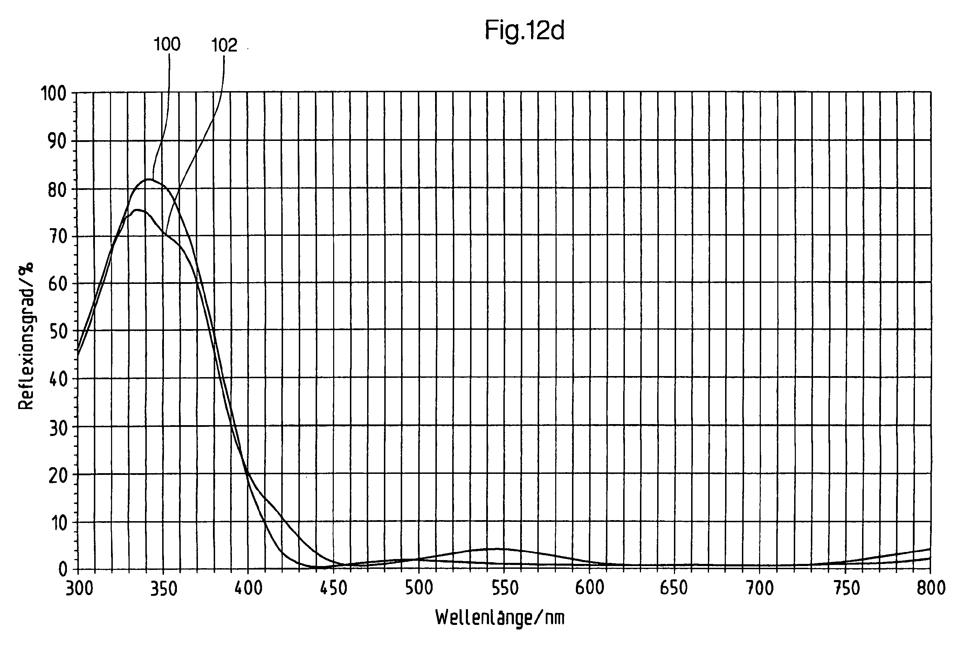

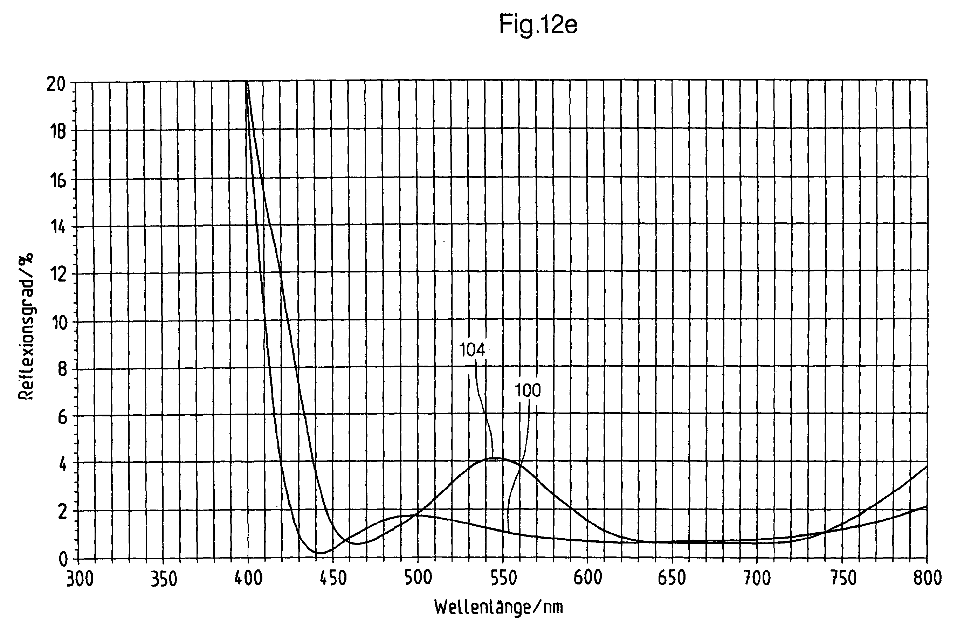

Das so veredelte Flachglas besitzt eine wellenlängenabhängige Transmission entsprechend den Abbildungen 12a - 12 c sowie eine Reflexionscharakteristik (Beleuchtung der Zinnoxid-Seite) gemäß den Abbildungen 12d und 12e. Die Beschichtungen weisen eine hohe optsiche Qualität auf und sind frei von Rissen, von sichtbaren Trübungen und Lichtstreuung.

Eine erfindungsgemäße Besonderheit stellt insbesondere die Glättung der vor der Beschichtung relativ rauhen Zinnoxid-Oberfläche durch den 5-Schicht-Entspiegelungsbelag dar: Während die unbeschichtete Zinnoxid-Oberfläche durch Rauheitswerte von $R_a$ / $R_z$ / $R_{max}$ = 0,02 / 0,30 / 0,52 $\mu$m gekennzeichnet ist, werden diese Werte durch den Entspiegelungsbelag reduziert auf 0,02 / 0,08 / 0,10, was den Werten für unbeschichtetes Floatglas entspricht.

Wie Reinigungstests zeigen, wird hierdurch erfindungsgemäß auch eine Anwendung der Zinnoxidschicht auf Außenseiten von Verglasungen ermöglicht, im einfachsten Falle also eine Einscheiben-Wärmeschutzverglasung wie in Figur 11 a gezeigt. Dies ist von besonderem Interesse für Ausstellungshallen, für die bislang nur Einscheiben-Verglasungen ohne wärmereflektierende Schicht verwendet werden konnten. Da die Wärmereflexionsfunktion allerdings durch Wasserbeläge beeinträchtigt wird, muß die Zinnoxid-Seite zum Gebäudeinneren gerichtet sein.

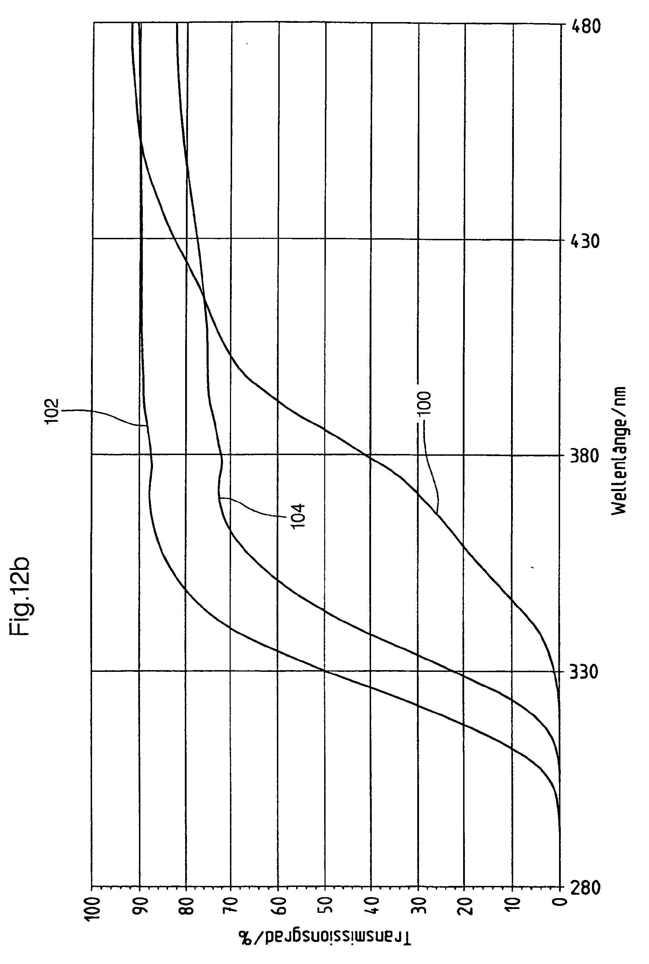

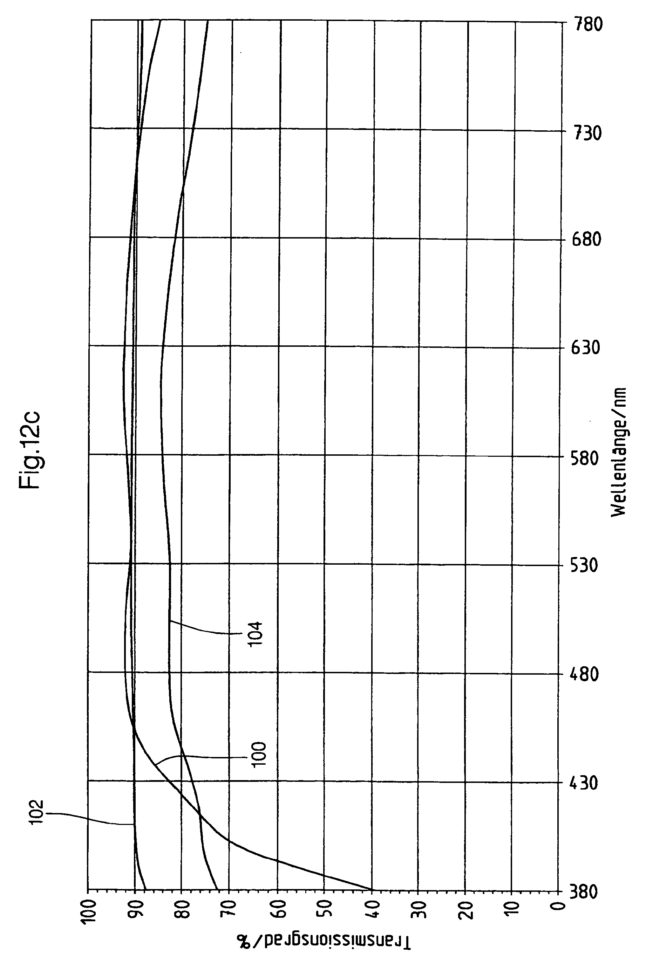

Figur 12c zeigt, daß im Sichtbaren bei dem erfindungsgemäß beschichteten Glas 100 - verglichen mit völlig unbeschichtetem Floatglas 102 - nur eine mäßige Entspiegelungswirkung von ca. 1 % erzielt wird, der Wärmedurchgangskoeffizient k wird jedoch von 5,8 W/m$^2$K auf ca. 3,5 W/m$^2$K gesenkt, und nähert sich so dem k-Wert einer unbeschichteten Isolierglas-Doppelscheibe von ca. 3,0 W/m$^2$K. Die UV-Transmission (Figur 12b) wird von 55 % für unbeschichtetes Floatglas 102 bzw. von 40 % für beidseitig mit AMIRAN-entspiegeltes Floatglas auf 8 % gesenkt. (in Fig. 12b nicht dargestellt)

Wie Figur 12a zeigt, werden oberhalb einer Wellenlänge von ca. 2500 nm im Infraroten die optischen Eigenschaften der Zinnoxidschicht durch die UV-reflektierenden Entspiegelungsschichten nicht verändert. Im Zwischenbereich des nahen Infrarot (NIR, 780 - 2500 nm) wird im Vergleich zu unbeschichtetem K-Glas 104 eine deutliche Sonnenschutzwirkung erzielt, da die Absenkung der Transmission im Bereich von 1050 bis 2400 nm den Transmissionsgewinn im Berich 780 - 100 nm, jeweils gewichtet mit dem Einstrahlungsspektrum der Sonne, deutlich überwiegt.

Die erfindungsgemäß mit einem Interferenzschichtsystem beschichtete Einfachscheibe gemäß Beispiel 4 kann auch dazu verwendet werden, Doppelscheiben-Isoliergläser aufzubauen.

Die Einfachscheibe gemäß Beispiel 4 kann femer als elektrische Heizscheibe, bei Erdung der Zinnoxid-Schicht als antielektrostatisches Element oder etwa zur Reflexion elektromagnetischer Wellen verwendet werden.

Es wurden folgende Lebensdauer- und Anwendungstests nach DIN EN 1096-2 an dem gemäß Beispiel 1 hergestellten Filter durchgeführt: Kondenswasserbeständigkeitsprüfung, Säurebeständigkeitsprüfung, Salzsprühnebelprüfung (neutral), Abriebfestigkeitsprüfung, jeweils Anforderungklasse A, wobei die Anforderung an Architekturverglasungen erfüllt wurden.

Die Figuren 12d - e zeigen die Reflexionskurven für Wärmeschutzglas 104 und mit dem erfindungsgemäßen Interferenzschichtsystem beschichteten Wärmeschutzglas 100 im Vergleich.

Nachfolgend sollen weitere Ausführungsbeispiele für UV-reflektierende Wärmeschutzgläser angegeben werden.

Beispiel 5:

Ein einseitig mit Zinnoxid beschichtetes Flachglas gemäß Beispiel 4 wird mit einer modifizierten 5-Schichten-Entspiegelung versehen, wodurch die Struktur STMTM/Glas/ZinnoxidfTMTS gebildet wird, was einem Weglassen der dicken M-Schicht auf der Zinnoxid-Seite gleichkommt. Dies wird dadurch erreicht, daß zunächst zwei Flachgläser an den Rändern mit den Zinnoxid-Seiten zusammengeklebt werden, der Verbund dann mit einer M-Schicht gemäß Beispiel 4 mittels Tauchverfahren beschichtet wird, die Scheiben getrennt werden und danach jeweils beidseitig mit der Struktur TMTS weiterbeschichtet werden, alles entsprechend Beispiel 4.

Das erfindungsgemäße, UV-reflektierende Wärmeschutzglas gemäß Beispiel 5 besitzt weitgehend gleiche Eigenschaften wie das nach Beispiel 4 hergestellte, wesentlicher Unterschied ist eine verbesserte Transmission im Sichtbaren von 92 %, was durch eine auf 1,9 % verbesserte mittlere sichtbare Reflexion erreicht wird.

Beispiel 6:

Es wird verfahren wie in Beispiel 5, jedoch wird die Ziehgeschwindigkeit zur Herstellung der jeweils dem Glas näheren T-Schicht von 262 mm/min auf 220 mm/min gesenkt, die Schichtdicke dieser Schicht also um ca. 11 % verringert. Hierdurch wird die mittlere sichtbare Restreflexion weiter gesenkt auf 1,5 %, wodurch die sichtbare Transmission weiter verbessert wird auf 93 % bei ansonsten gegenüber den Beispielen 4 und 5 unveränderten Eigenschaften.

[1] Translator note: the words in brackets do not appear in the document submitted for translation

**Patentansprüche**

1. Optisches Element bestehend aus einem transparenten Substrat mit einem UV-reflektierenden Interferenzschichtsystem zur breitbandigen Entspiegelung im sichtbaren Wellenlängenbereich, wobei aufeinanderfolgende Schichten unterschiedliche Brechungsindizes aufweisen und die Einzelschichten UV- und temperaturstabile anorganische Materialien umfassen,
   **dadurch gekennzeichnet, dass**
   das Interferenzschichtsystem aus genau fünf Einzelschichten auf dem Substrat mit folgendem Schichtaufbau besteht:

   Substrat/M 1/T1/M2/T2/S. wobei
   Substrat das transparente Substrat;
   M1, M2 eine Schicht mit mittlerem Brechungsindex $n_m$
   T1, T2 eine Schicht mit hohem Brechungsindex $n_h$
   S eine Schicht mit niedrigem Brechungsindex $n_8$

   bezeichnet und
   bei einer Referenzwellenlänge von 550 nm die Brechungsindizes der Einzelschichten in folgendem Bereich liegen:

$$n_n < 1{,}5$$

$$1{,}6 < n_m < 1{,}8$$

$$1{,}9 < n_h$$

und
die Schichtdicke der Einzelschichten in folgendem Bereich liegt:

für die Schicht M1: 70 nm < $d_{M1}$ < dM$_1$ < 100 nm
für die Schicht T1: 30 nm < $d_{T1}$ < 70 nm
für die Schicht M2: 20 nm < $d_{M2}$ < 40 nm
für die Schicht T2: 30 nm < $d_{T2}$ < 50 nm
für die Schicht S: 90 nm < $d_s$ < 110 nm

2. Optisches Element nach Anspruch 1, **dadurch gekennzeichnet, daß** die anorganische Materialien anorganische Oxide sind,

3. Optisches Element nach einem der Ansprüche 1 oder 2, **dadurch gekennzeichnet, daß** die anorganischen Oxide oberhalb einer Lichtwellenlänge von 320 nm weitgehend transparent sind.

4. Optisches Element nach einem der Ansprüche 1 bis 3, **dadurch gekennzeichnet, daß** die Einzelschichten eine oder mehrere Materialien oder Mischungen aus der nachfolgenden Gruppe von anorganischen Oxiden umfassen: $TiO_2$, $Nb_2O_5$, $Ta_2O_5$, $CeO_2$, $HfO_2$, $SiO_2$, $MgF_2$, $Al_2O_3$, $ZrO_2$.

5. Optisches Element nach einem der Ansprüche 1 bis 4, **dadurch gekennzeichnet, daß** die Schichten nachfolgende Materialien umfassen:

die hochbrechende Schicht mit $n_n$ $TiO_2$
die niedrigbrechende Schicht mit $n_n$ $SiO_2$
und die mittelbrechende Schicht mit $n_m$ eine Mischung aus $TiO_2$ und $SiO_2$.

6. Optisches Element nach einem der Ansprüche 1 bis 4, **dadurch gekennzeichnet, daß** die hoch brechenden Einzelschichten mit $n_h$ eines oder mehreren der nachfolgenden Materialien umfassen:
$Nb_2O_5$, $Ta_2O_5$, $CeO_2$, $HfO_2$ sowie Mischungen dieser Materialien mit $TiO_2$.
die niedrigbrechenden Schichten folgende Materialien umfassen:
$MgF_2$ oder Mischungen von $MgF_2$ mit $SiO_2$ sowie die mittelbrechenden Schichten eines oder mehrere der nachfolgenden Materialien:
$Al_2O_3$, $ZrO_2$.

7. Optisches Element gemäß einem der Ansprüche 1 bis 8, wobei das transparente Substrat Welchglas in Form von Floatglas auch in eisenarmer Form ist.

8. Optisches Element gemäß einem der Ansprüche 1 bis 7, wobei das transparente Substrat ein Hartglas, insbesondere Aluminosilikat- und Borosilikat-Hartglas ist.

9. Optisches Element gemäß einem der Ansprüche 1 bis 8, wobei das transparente Substrat Quarzglas ist.

10. UV-reflektierendes Warmeschutzglas, welches wenigstens ein optisches Element gemäß einem der Ansprüche 1 bis 9 umfasst, wobei das optische Element auf wenigstens einer Seite eine wärmereflektierende Beschichtung aufweist die einen Flächenwiderstand < 20 Ω aufweist.

11. UV-reflektierendes Wärmeschutzglas gemäß Anspruch 10, wobei die wärmereflektierenden Schicht mit einem Flächenwiderstarid < 20 Ω auf wenigstens einer Seite auf das Substrat aufgebracht ist und darauf das UV-reflektierende Interferenzschichtsystem.

12. W reflektierendes Wärmeschutzglas gemäß Anspruch 10, wobei auf dem UV-refklektierenden Interferenzschichtsystem die wärmereflektierende Schicht mit einem Flächenwiderstand < 20 Ω aufgebracht ist.

13. UV-reflektierendes Wärmeschutzglas nach einem der Ansprüche 10-12, **dadurch gekennzeichnet, daß** die UV-Transmission des Wärmeschutzglases im UV-Bereich von 280 - 380 nm geringer als 8 % und im sichtbaren Wellenlängenbereich größer als 90 % ist.

14. UV-reflektierendes Wärmeschutzglas gemäß einem der Ansprüche 10 bis 13. **dadurch gekennzeichnet, daß** die wärmereflektierende Beschichtung eines oder mehrere der nachfolgenden Materialien umfasst:

$SnO_2$: F, Sb
ZnO : Al
$In_2O_3$ : Sn
Ag-basierte Beschichtung

15. UV-reflektierendes Wärmeschutzglas gemäß einem der Ansprüche 10 bis 14, **dadurch gekennzeichnet, dass** der Wärmedurchgangswert des Wärmeschutzglases kleiner als 3,5 $W/m^2K$ ist.

16. UV-reflektierendes Wärmeschutzglas als Doppel-Scheibenisolierglas mit zwei transpareneten Substraten wobei wenigstens eine Seite eines der transparenten Substrate eine wärmereflektierende Schicht mit einem Flächenwiderstand von wenigen als 20 Ω umfasst und wenigstes drei Seiten der zwei Substrate ein reflektierendes Interferenzschichtsystem aus genau fünf Einzelschichten aus UV-und temperaturstabilen anorganischen Materialien mit folgendem Schichtaufbau, aufweisen :

Substrat M1/T1/M2/T2/S, wobei
Substrat das transparente Substrat;
M1, M2 eine Schicht mit mittlerem Brechungsindex $n_m$
T1. T2 eine Schicht mit hohem Brechungsindex $n_n$
S eine Schicht mit niedrigem Brechungsindex $n_a$

bezeichnet und
bei einer Referenzwellenlänge von 550 nm die Brechungsindizes der Einzelschichten in folgendem Bereich liegen:

$$N_n < 1{,}5$$

$$1{,}6 < n_m < 1{,}8$$

$$1{,}9 < n_n$$

und
die Schichtdicke der Einzelschichten in folgendem Bereich liegt:

für die Schicht M1: 70 nm < $d_{m1}$ < 100 nm
für die Schicht T1: 30 nm < $d_{T1}$ < 70 nm
für die Schicht M2: 20 nm < $d_{M2}$ < 40 nm
für die Schicht T2: 30 nm < $d_{T2}$ < 50 nm
für die Schicht S: 90 nm < $d_s$ <110 nm

17. UV-reflektierendes Wärmeschutzglas gemäß Anspruch 16, **dadurch gekennzeichnet, dass** es einen k-Wert kleiner als 1,0 $W/m^2K$ und eine UV-Transmission kleiner 4 % und eine sichtbare Transmission im sichtbaren Wellenlängenbereich größer 85 % aufweist.

**18.** Verfahren zum Herstellen eines optischen Elementes oder eines UV-reflektierenden Wänneschutzglases gemäß einem der Ansprüche 1 bis 17, wobei das Auftragen der Einzelschichten mittels eines Tauch- oder Schleuderverfahrens in Sol-Gel-Technik erfolgt.

**19.** Verfahren zum Herstellen eines optischen Elementes oder eines UV-reflektierenden Wärmeschutzglases gemäß einem der Ansprüche 1 bis 17, wobei die Einzelschichten mittels Kathodenzerstäubung, physikalischem Aufdampfen oder chemischer Gasphasenabscheidung, insbesondere ionen- oder plasmaunterstützt erfolgt.

**20.** Verfahren nach einem der Ansprüche 18 bis 19, **dadurch gekennzeichnet, dass** das Substrat beidseitig beschichtet wird.

**21.** Verfahren nach einem der Ansprüche 18 bis 19, **dadurch gekennzeichnet, dass** eine Seite des Substrates abgedeckt wird und das Substrat nur einseitig beschichtet wird.

**22.** Verwendung eines optischen Elementes gemäß einem der Ansprüche 1 bis 9 als von Scheiben für Verglasungen.

**23.** Verwendung eines optischen Elementes gemäß einem der Ansprüche 1 bis 9 als Lampenkolben in der Lichtindustrie.

**24.** Verwendung eines optischen Elementes gemäß einem der Ansprüche 1 bis 9 als rohrförmiger Hüllkolben für Lampen oder Vorsatzscheiben aus Hart- oder Weichglas.

**Claims**

**1.** Optical element comprising a transparent substrate with a UV-reflective interference layer system for broadband antireflection in the visible wavelength range, whereby consecutive layers have different indices of refraction and the individual layers comprise UV and temperature-stable inorganic materials,
**characterised in that**
the interference layer system comprises precisely five individual layers on the substrate with the following layer structure:

substrate/M 1 /T 1 /M2/T2/S, whereby
substrate denotes the transparent substrate,
M1, M2 denote layers with an intermediate index of refraction $n_m$,
T1, T2 denote layers with a high index of refraction $n_h$,
S denotes a layer with a low index of refraction $n_n$,

and
for a reference wavelength of 550 nm, the indices of refraction of the individual layers lie in the following range:

$$n_n < 1.5$$

$$1.6 < n_m < 1.8$$

$$1.9 < n_h$$

and
the thickness of the individual layers lies in the following range:

for the layer M1: 70 nm < $d_{M1}$ < 100 nm
for the layer T1: 30 nm < $d_{T1}$ < 70 nm
for the layer M2: 20 nm < $d_{M2}$ < 40 nm
for the layer T2: 30 nm < $d_{T2}$ < 50 nm
for the layer S: 90 nm < $d_s$ < 110 nm.

**2.** Optical element according to claim 1, **characterised in that** the inorganic materials are inorganic oxides.

**3.** Optical element according to either claim 1 or claim 2, **characterised in that** the inorganic oxides are largely transparent above a light wavelength of 320 nm.

**4.** Optical element according to any one of claims 1 to 3, **characterised in that** the individual layers comprise one or a plurality of materials or mixtures from the following group of inorganic oxides: $TiO_2$, $Nb_2O_5$, $Ta_2O_5$, $CeO_2$, $HfO_2$, $SiO_2$, $MgF_2$, $Al_2O_3$, $ZrO_2$.

**5.** Optical element according to any one of claims 1 to 4, **characterised in that** the layers comprise the following materials:

the high-refracting layer with $n_h$, $TiO_2$
the low-refracting layer with $n_n$, $SiO_2$
and the intermediate-refracting layer with $n_m$, a mixture of $TiO_2$ and $SiO_2$.

**6.** Optical element according to any one of claims 1 to 4, **characterised in that** the high-refracting individual layers with $n_h$ comprise one or a plurality of the following materials: $Nb_2O_5$, $Ta_2O_5$, $CeO_2$, $HfO_2$, plus mixtures of these materials with $TiO_2$, that the low-refracting layers comprise the following materials: $MgF_2$ or mixtures of $MgF_2$ with $SiO_2$, and the intermediate-refracting layers contain one or a plurality of the following materials: $Al_2O_3$, $ZrO_2$.

**7.** Optical element according to any one of claims 1 to 6, whereby the transparent substrate is soft glass in the form of float glass, including in a low-iron form.

**8.** Optical element according to any one of claims 1 to 7, whereby the transparent substrate is a hard glass, in particular aluminosilicate and borosilicate hard glass.

**9.** Optical element according to any one of claims 1 to 8, whereby the transparent substrate is quartz glass.

**10.** UV-reflective heat-protection glass, comprising at least one optical element according to any one of claims 1 to 9 whereby the optical element has on at least one side a heat-reflecting coating with a surface resistance of < 20 $\Omega$.

**11.** UV-reflective heat protection glass according to claim 10, whereby the heat reflecting coating with a surface resistance of < 20 $\Omega$ is deposited on the substrate on at least one side and the UV-reflective interference layer system is deposited thereupon.

**12.** UV-reflective heat protection glass according to claim 10, whereby the heat-reflecting coating with a surface resistance of < 20 S2 is deposited on the UV-reflective interference layer system.

**13.** UV-reflective heat protection glass according to any one of claims 10 to 12, **characterised in that** the UV transmission of the heat protection glass in the UV range of 280-380 nm is less than 8% and in the visible wavelength range is greater than 90%.

**14.** UV-reflective heat protection glass according to any one of claims 10 to 13, **characterised in that** the heat-reflecting coating comprises one or a plurality of the following materials:

$SnO_2$ F, Sb
ZnO: Al
$In_2O_3$:Sn
Ag-based coating.

**15.** UV-reflective heat protection glass according to any one of claims 10 to 14, **characterised in that** the heat transfer value of the heat protection glass is less than 3.5 $W/m^2K$.

**16.** UV-reflective heat protection glass as double-pane insulated glass having two transparent substrates, whereby at least one side of one of the transparent substrates has a heat-reflecting layer with a surface resistance of less than 20 $\Omega$ and at least three sides of the two substrates comprise a reflective interference layer system of precisely five individual layers made of UV and temperature-stable inorganic materials having the following layer structure:

substrate/M1/T1/M2/T2/S, whereby
substrate denotes the transparent substrate,
M1, M2 denote layers with intermediate index of refraction $n_m$,
T1, T2 denote layers with high index of refraction $n_h$,
S denotes a layer with low index of refraction $n_n$,

and

for a reference wavelength of 550 nm, the indices of refraction of the individual layers lie in the following range:

$$n_n < 1.5$$

$$1.6 < n_m < 1.8$$

$$1.9 < n_h$$

and
the thickness of the individual layers lies in the following range:

for the layer M1: 70 nm < $d_{M1}$ < 100 nm
for the layer T1: 30 nm < $d_{T1}$ < 70 nm
for the layer M2: 20 nm < $d_{M2}$ < 40 nm
for the layer T2: 30 nm < $d_{T2}$ < 50 nm
for the layer S: 90 nm < $d_s$ < 110 nm.

**17.** UV-reflective heat protection glass according to claim 16, **characterised in that** it has a k-value of less than 1.0 W/m$^2$ K and a UV transmission of less than 4% and a visible transmission in the visible wavelength range of more than 85%.

**18.** Method for producing an optical element or a UV-reflective heat protection glass according to any one of claims 1 to 17, whereby the deposition of the individual layers is performed by a dipping or centrifugal method using the sol-gel technique.

**19.** Method for producing an optical element or a UV-reflective heat protection glass according to any one of claims 1 to 17, whereby *(the deposition of)*[1] the individual layers is performed by means of cathode sputtering, physical vaporisation or chemical vapour-phase deposition, in particular ion or plasma-assisted.

**20.** Method according to either claim 18 or 19, **characterised in that** the substrate is coated on both sides.

**21.** Method according to either claim 18 or 19, **characterised in that** one side of the substrate is covered, and the substrate is only coated on one side.

**22.** Use of an optical element according to any one of claims 1 to 9 as panes for glazing.

**23.** Use of an optical element according to any one of claims 1 to 9 as light bulbs in the lighting industry.

**24.** Use of an optical element according any one of claims 1 to 9 as tubular casings for lamps or front panels made of hard or soft glass.

**Revendications**

**1.** Elément optique constitué d'un substrat transparent, comportant un système de couches d'interférence réfléchissant les UV à titre de traitement antireflet à large bande dans la plage de longueurs d'ondes visibles, des couches se succédant comportant différents indices de réfraction, et les couches individuelles contenant des matériaux inorganiques stables aux UV et à la température,
**caractérisé en ce que**
le système de couches d'interférence est constitué exactement de cinq couches individuelles appliquées sur le substrat, avec la structure de couches suivante :

substrat / M1 / T1 / M2 / T2 / S,
substrat désignant le substrat transparent ;
M1, M2 une couche à indice de réfraction moyen $n_m$,
T1, T2 une couche à indice de réfraction élevé $n_h$,
S une couche à faible indice de réfraction $n_s$, et
**en ce qu'**à une longueur d'onde de référence de 550 nm,

les indices de réfraction des différentes couches se situent dans la plage suivante :

$$n_u < 1,5$$

$$1,6 < n_m < 1,8$$

$$1,9 < n_h,$$

et
**en ce que** l'épaisseur de couche des différentes couches se situe dans la plage suivante :

pour la couche M1 : 70 nm < $d_{M1}$ < 100 nm
pour la couche T1 : 30 nm < $d_{T1}$ < 70 nm
pour la couche M2 : 20 nm < $d_{M2}$ < 40 nm
pour la couche T2 : 30 nm < $d_{T2}$ < 50 nm
pour la couche S : 90 nm < $d_s$ < 110 nm.

2. Elément optique selon la revendication 1, **caractérisé en ce que** les matériaux inorganiques sont des oxydes inorganiques.

3. Elément optique selon l'une des revendications 1 ou 2, **caractérisé en ce que** les oxydes inorganiques sont dans une large mesure transparents au-delà d'une longueur d'onde lumineuse de 320 nm.

4. Elément optique selon l'une des revendications 1 à 3, **caractérisé en ce que** les couches individuelles contiennent un ou plusieurs matériaux ou mélanges du groupe suivant d'oxydes inorganiques :
$TiO_2$ , $Nb_2O_5$ , $Ta_2O_5$, $CeO_2$, $HfO_2$ , $SiO_2$, $MgF_2$, $Al_2O_3$, $ZrO_2$.

5. Elément optique selon l'une des revendications 1 à 4, **caractérisé en ce que** les couches contiennent les matériaux suivants :

la couche à indice de réfraction élevé $n_h$, du $TiO_2$,
la couche à faible indice de réfraction $n_n$, du $SiO_2$, et
la couche à indice de réfraction moyen $n_m$, un mélange de $TiO_2$ et de $SiO_2$.

6. Elément optique selon l'une des revendications 1 à 4, **caractérisé en ce que** les couches individuelles à indice de réfraction élevé $n_h$ contiennent un ou plusieurs des matériaux suivants :

$Nb_2O_5$, $Ta_2O_5$, $CeO_2$, $HfO_2$, ainsi que des mélanges de ces matériaux avec du $TiO_2$,

**en ce que** les couches à faible indice de réfraction contiennent les matériaux suivants :

du $MgF_2$ ou des mélanges de $MgF_2$ avec du $SiO_2$, et **en ce que** les couches à indice de réfraction moyen contiennent un ou plusieurs des matériaux suivants :
$Al_2O_3$, $ZrO_2$.

**7.** Elément optique selon l'une des revendications 1 à 6, dans lequel le substrat transparent est un verre moux sous la forme de verre flotté, également sous une forme pauvre en fer.

**8.** Elément optique selon l'une des revendications 1 à 7, dans lequel le substrat transparent est un verre dur, notamment un verre dur d'aluminosilicate et de borosilicate.

**9.** Elément optique selon l'une des revendications 1 à 8, dans lequel le substrat transparent est du verre au quartz.

**10.** Verre de protection thermique réfléchissant les UV, comprenant au moins un élément optique selon l'une des revendications 1 à 9, l'élément optique comportant, au moins sur une face, un revêtement de réflexion thermique d'une résistance de surface < 20 Ω.

**11.** Verre de protection thermique réfléchissant les UV selon la revendication 10, dans lequel la couche de réflexion thermique d'une résistance de surface < 20 Ω est appliquée sur au moins une face du substrat, et sur celle-ci, le système de couches d'interférence réfléchissant les UV.

**12.** Verre de protection thermique réfléchissant les UV selon la revendication 10, sur lequel la couche de réflexion thermique d'une résistance de surface < 20 Ω est appliquée sur le système de couches d'interférence réfléchissant les UV.

**13.** Verre de protection thermique réfléchissant les UV selon l'une des revendications 10 à 12, **caractérisé en ce que** la transmission UV du verre de protection thermique est inférieure à 8 % dans la plage UV de 280 à 380 nm, et supérieure à 90 % dans la plage de longueur d'onde visible.

**14.** Verre de protection thermique réfléchissant les UV selon l'une des revendications 10 à 13, **caractérisé en ce que** le revêtement de réflexion thermique contient un ou plusieurs des matériaux suivants :

$SnO_2$ : F, Sb
ZnO : A1
$In_2O_3$ Sn
revêtement à base d'argent.

**15.** Verre de protection thermique réfléchissant les UV selon l'une des revendications 10 à 14, **caractérisé en ce que** la valeur de transfert thermique du verre de protection thermique est inférieure à 3,5 W/m$^2$K.

**16.** Verre de protection thermique réfléchissant les UV en tant que verre d'isolation de double vitrage, comportant deux substrats transparents, au moins une face d'un des substrats transparents étant pourvue d'une couche de réflexion thermique d'une résistance de surface inférieure à 20 Ω, et au moins trois faces des deux substrats comportant un système de couches d'interférence réfléchissant constitué exactement de cinq couches individuelles en matériaux inorganiques stables aux UV et à la température, avec la structure de couches suivante :

substrat / M1 / T1 / M2 / T2 / S,
substrat désignant le substrat transparent ;
M1, M2, une couche à indice de réfraction moyen $n_m$,
T1, T2, une couche à indice de réfraction élevé $n_n$,
S, une couche à faible indice de réfraction $n_s$, et
à une longueur d'onde de référence de 550 nm, les

indices de réfraction des couches individuelles se situent dans la plage suivante :

$$N_n < 1,5$$

$$1{,}6 \; < \; n_m \; < \; 1{,}8$$

$$1{,}9 \; < \; n_n,$$

et

l'épaisseur de couche des différentes couches se situe dans la plage suivante :

pour la couche M1 : 70 nm < $d_{m1}$ < 100 nm
pour la couche T1 : 30 nm < $d_{T1}$ < 70 nm
pour la couche M2 : 20 nm < $d_{M2}$ < 40 nm
pour la couche T2 : 30 nm < $d_{T2}$ < 50 nm
pour la couche S : 90 nm < $d_s$ < 110 nm.

17. Verre de protection thermique réfléchissant les UV selon la revendication 16, **caractérisé en ce qu'**il présente une valeur k inférieure à 1,0 W/m$^2$K, une transmission UV inférieure à 4 % et une transmission visible dans la plage de longueur d'onde visible supérieure à 85 %.

18. Procédé destiné à la fabrication d'un élément optique ou d'un verre de protection thermique réfléchissant les UV selon l'une des revendications 1 à 17, dans lequel l'application des différentes couches est effectuée en technique sol-gel au moyen d'un procédé d'immersion ou de centrifugation.

19. Procédé destiné à la fabrication d'un élément optique ou d'un verre de protection thermique réfléchissant les UV selon l'une des revendications 1 à 17, dans lequel l'application des différentes couches est effectuée au moyen de pulvérisation cathodique, de dépôt physique en phase vapeur ou de dépôt chimique en phase gazeuse, assisté notamment par ions ou plasma.

20. Procédé selon l'une des revendications 18 à 19, **caractérisé en ce que** le substrat est revêtu sur les deux faces.

21. Procédé selon l'une des revendications 18 et 19, **caractérisé en ce qu'**une face du substrat est recouverte, et **en ce que** le substrat n'est revêtu que sur une face.

22. Utilisation d'un élément optique selon l'une des revendications 1 à 9 en tant que vitres de vitrages.

23. Utilisation d'un élément optique selon l'une des revendications 1 à 9 en tant qu'ampoules de lampes dans l'industrie des luminaires.

24. Utilisation d'un élément optique selon l'une des revendications 1 à 9 en tant qu'enveloppe tubulaire d'ampoules de lampes ou de vitres de protection en verre dur ou doux.

Fig.1

EP 1 248 959 B1

Fig.2

Fig.3

UV-Schutz-Gläser

Fig.4    Entspiegelung mit UV-Schutz gemäß Beispiel 1

d=2,8mm
$\tau_{UV(300-380nm)}=15\%$

Transmissionsgrad/%

Wellenlänge/nm

EP 1 248 959 B1

Fig.5 Entspiegelung mit UV-Schutz gemäß Beispiel 1

Dicke einer Scheibe 2,8mm

Legend:
- Entspiegelung mit UV-Schutz
- Entspiegelung mit UV-Schutz 2 Scheiben
- Entspiegelung mit UV-Schutz 3 Scheiben

$\tau_{UV(300-380nm)} = 15\%$
$\tau_{vA} = 96,7\%$
$\tau_{UV(300-380nm)} = 7\%$
$\tau_{vA} = 93,5\%$
$\tau_{UV(300-380nm)} = 4\%$
$\tau_{vA} = 90,5\%$

Y-axis: Transmissionsgrad/%
X-axis: Wellenlänge/nm

EP 1 248 959 B1

Fig.6

## Fig.7

$\varphi = 30°$

MIROGARD

AMIRAN

ERFINDUNG
gem. BEISPIEL 1

%R

Wellenlänge (nm)

EP 1 248 959 B1

Fig.8a

Filter mit farbneutraler Restreflexion gemäß Beispiel 1

# Fig.8b

Filter mit farbneutraler Restreflexion gemäß Beispiel 1

EP 1 248 959 B1

## Fig.9

Beispiel 2, grün

$\rho_{VA} = 2.0\%$

EP 1 248 959 B1

## Fig.10

Filter mit Blau-violetter Restreflexion gemäß Beispiel 3

EP 1 248 959 B1

Fig.11a

Fig.11b

Fig.11c

Fig.12a

EP 1 248 959 B1

Fig.12b

102

100

104

Transmissionsgrad/%

Wellenlänge/nm

100 90 80 70 60 50 40 30 20 10 0

280 330 380 430 480

Fig.12c

Fig.12d

EP 1 248 959 B1

## Fig.12e

EP 1 248 959 B1